# EUROPEAN PATENT SPECIFICATION

(11) **EP 1 114 485 B1**
(45) Date of publication and mention of the grant of the patent: **03.05.2006**
(21) Application number: 99942669.5
(22) Date of filing: 14.09.1999
(51) Int. Cl.: H01M 8/04

(54) **ELECTRICAL CURRENT GENERATION SYSTEM**
STROMERZEUGUNGSSYSTEM
GENERATEUR DE COURANT ELECTRIQUE

(30) Priority: 14.09.1998 US 100091 P; 10.06.1999 CA 2274240
(43) Date of publication of application: 11.07.2001
(73) Proprietor: Questair Technologies, Inc., Burnaby, British Columbia V5J 4R8 (CA)
(72) Inventor: KEEFER, Bowie, G., Vancouver, British Columbia V6R 2M1 (CA); McLEAN, Christopher, Vancouver, British Columbia V6R 2L8 (CA); BROWN, Michael, J., West Vancouver, British Columbia V7T 2H3 (CA)
(74) Representative: Hoarton, Lloyd Douglas Charles
(86) International application number: PCT/CA1999/000823
(87) International publication number: WO 2000/016425

(56) References cited:
- EP-A- 0 341 189
- EP-A- 0 691 701
- WO-A-96/13871
- DE-A- 3 913 581
- US-A- 5 366 818
- US-A- 5 543 238
- PATENT ABSTRACTS OF JAPAN vol. 1999, no. 13, 30 November 1999 (1999-11-30) & JP 11 214021 A (ISHIKAWAJIMA HARIMA HEAVY IND CO LTD;ONDA KAZUO), 6 August 1999 (1999-08-06)
- PATENT ABSTRACTS OF JAPAN vol. 1996, no. 06, 28 June 1996 (1996-06-28) & JP 08 045526 A (ISHIKAWAJIMA HARIMA HEAVY IND CO LTD), 16 February 1996 (1996-02-16)

## Description

### FIELD OF THE INVENTION

The present invention relates to a fuel cell for the generation of electrical current. In particular, the present invention relates to a fuel cell-based electrical generation system which employs pressure swing adsorption for enhancing the efficiency of the fuel cell.

### BACKGROUND OF THE INVENTION

Fuel cells provide an environmentally friendly source of electrical current. One form of fuel cell used for generating electrical power includes an anode for receiving hydrogen gas, a cathode for receiving oxygen gas, and an alkaline electrolyte. Another form of fuel cell includes an anode channel for receiving a flow of hydrogen gas, a cathode channel for receiving a flow of oxygen gas, and a polymer electrolyte membrane (PEM) which separates the anode channel from the cathode channel. In both instances, oxygen gas which enters the cathode reacts with hydrogen ions which cross the electrolyte to generate a flow of electrons. Environmentally safe water vapour is also produced as a byproduct. However, several factors have limited the widespread use of fuel cells as power generation systems.

Firstly, in order to extract a continuous source of electrical power from the fuel cell, it is necessary to provide the fuel cell with a continuous source of oxygen and hydrogen gas. However, with atmospheric air as the direct source of oxygen to the cathode channel, performance of PEM fuel cells is severely impaired by the low partial pressure of oxygen and the concentration polarization of nitrogen, while alkaline fuel cells require a pretreatment purification system to remove carbon dioxide from the feed air. Further, as the average oxygen concentration in a cathode channel with atmospheric air feed is typically only about 15%, the size of the fuel cell must be undesirably large in order to provide sufficient power for industrial applications.

In order to achieve a partial pressure of oxygen through the cathode channel sufficient for the attainment of competitive current densities from a PEM fuel cell system, particularly for vehicular propulsion, it is necessary to compress the air feed to at least 3 atmospheres before the air feed is introduced to the cathode channel. As will be appreciated, the power input necessary to sufficiently compress the air feed reduces the overall efficiency of the fuel cell system. It has been proposed to use polymeric membranes to enrich the oxygen, but such membranes actually reduce the oxygen partial pressure and the reduction in total pressure more than offsets the limited enrichment attainable.

Secondly, external production, purification, dispensing and storage of hydrogen (either as compressed gas or cryogenic liquid) requires costly infrastructure, while storage of hydrogen fuel on vehicles presents considerable technical and economic barriers. Accordingly, for stationary power generation, it is preferred to generate hydrogen from natural gas by steam reforming or partial oxidation followed by water gas shift. For fuel cell vehicles using a liquid fuel, it is preferred to generate hydrogen from methanol by steam reforming or from gasoline by partial oxidation or autothermal reforming, again followed by water gas shift. However, the resulting hydrogen contains carbon monoxide and carbon dioxide impurities which cannot be tolerated respectively by the PEM fuel cell catalytic electrodes and the alkaline fuel cell electrolyte in more than trace levels.

The conventional method of removing residual carbon monoxide from the hydrogen feed to PEM fuel cells has been catalytic selective oxidation, which compromises efficiency as both the carbon monoxide and a fraction of the hydrogen are consumed by low temperature oxidation, without any recovery of the heat of combustion. Palladium diffusion membranes can be used for hydrogen purification, but have the disadvantages of delivery of the purified hydrogen at low pressure, and also the use of rare and costly materials.

Thirdly, pressure swing adsorption systems (PSA) have the attractive features of being able to provide continuous sources of oxygen and hydrogen gas, without significant contaminant levels. PSA systems and vacuum pressure swing adsorption systems (vacuum-PSA) separate gas fractions from a gas mixture by coordinating pressure cycling and flow reversals over an adsorbent bed which preferentially adsorbs a more readily adsorbed gas component relative to a less readily adsorbed gas component of the mixture. The total pressure of the gas mixture in the adsorbent bed is elevated while the gas mixture is flowing through the adsorbent bed from a first end to a second end thereof, and is reduced while the gas mixture is flowing through the adsorbent from the second end back to the first end. As the PSA cycle is repeated, the less readily adsorbed component is concentrated adjacent the second end of the adsorbent bed, while the more readily adsorbed component is concentrated adjacent the first end of the adsorbent bed. As a result, a "light" product (a gas fraction depleted in the more readily adsorbed component and enriched in the less readily adsorbed component) is delivered from the second end of the bed, and a "heavy" product (a gas fraction enriched in the more strongly adsorbed component) is exhausted from the first end of the bed.

In a preferred implementation of the first embodiment, the pressure swing adsorption system extracts enriched oxygen gas from air. The oxygen pressure swing adsorption system includes a rotary module having a stator and a rotor rotatable relative to the stator. The rotor includes a number of flow paths for receiving adsorbent material therein for preferentially adsorbing a first gas component in response to increasing pressure in the flow paths relative to a second gas component. The pressure swing adsorption system also includes compression machinery coupled to the rotary module for facilitating gas flow through the flow paths for separating the first gas component from the second gas component. The stator includes a first stator valve surface, a second stator valve surface, and plurality of function compartments opening into the stator valve surfaces. The function compartments include a gas feed compartment, a light reflux exit compartment and a light reflux return compartment.

In one variation, the compression machinery comprises a compressor for delivering pressurized air to the gas feed compartment, and a light reflux expander coupled between the light reflux exit compartment and the light reflux return compartment. The gas recirculating means comprises a compressor coupled to the light reflux expander for supplying oxygen gas, exhausted from the-cathode gas outlet, under pressure to the cathode gas inlet. As a result, energy recovered from the pressure swing adsorption system can be applied to boost the pressure of oxygen gas delivered to the cathode gas inlet.

In another variation, restrictor orifices are disposed between the light reflux exit compartment and the light reflux return compartment for pressure letdown in replacement of the light reflux expander. The gas recirculating means comprises a compressor coupled to the cathode gas outlet for supplying oxygen gas to the cathode gas inlet, and a restrictive orifice disposed between the cathode gas outlet and a pressurization compartment for recycling a portion of the oxygen gas as feed gas to the pressure swing adsorption system. As a result, energy recovered from the cathode gas outlet can be used to help pressurize the cathode gas inlet through the PSA system.

According to a second embodiment, the present invention provides an electrical current generating system comprising:
a fuel cell including an anode channel including an anode gas inlet and an anode gas outlet, a cathode channel including a cathode gas inlet and a cathode gas outlet, and an electrolyte in communication with the anode and cathode channel for facilitating ion exchange between the anode and cathode channel;
an oxygen gas delivery system coupled to the cathode gas inlet for delivering a gaseous stream comprising oxygen gas to the cathode channel; and
a hydrogen gas delivery system coupled to the anode gas inlet, for delivering a gaseous stream enriched in hydrogen gas to the anode channel, including a hydrogen rotary pressure swing adsorption system for enriching hydrogen in a gaseous feed.

However, the conventional system for implementing pressure swing adsorption or vacuum pressure swing adsorption uses two or more stationary adsorbent beds in parallel, with directional valving at each end of each adsorbent bed to connect the beds in alternating sequence to pressure sources and sinks. This system is often difficult and expensive to implement due to the complexity of the valving required.

Further, the conventional PSA system makes inefficient use of applied energy, because feed gas pressurization is provided by a compressor whose delivery pressure is the highest pressure of the cycle. In PSA, energy expended in compressing the feed gas used for pressurization is then dissipated in throttling over valves over the instantaneous pressure difference between the adsorber and the high pressure supply. Similarly, invacuum-PSA, where the lower pressure of the cycle is established by a vacuum pump exhausting gas at that pressure, energy is dissipated in throttling over valves during countercurrent blowdown of adsorbers whose pressure is being reduced. A further energy dissipation in both systems occurs in throttling of light reflux gas used for purge, equalization, cocurrent blowdown and product pressurization or backfill steps. These energy sinks reduce the overall efficiency of the fuel cell system.

Additionally, conventional PSA systems can generally only operate at relatively low cycle frequencies, necessitating the use oflarge adsorbent inventories. The consequent large size and weight of such PSA systems renders them unsuitable for vehicular fuel cell applications.

Accordingly, there remains a need for an efficient fuel cell-based electrical generation system which can produce sufficient power for industrial applications and which is suitable for vehicular applications.

DE 3913581 describes a process for recycling anode waste gas back to a fuel cell anode wherein the anode waste gas is passed through a pressure swing adsorption system for separating hydrogen from the anode waste gas. The separate hydrogen is then mixed with the feed stream for the fuel cell anode.

### SUMMARY OF THE INVENTION

According to the invention, there is provided a fuel cell-based electrical generation system which addresses the deficiencies of the prior art fuel cell electrical generation systems.

According to a first embodiment, the present invention provides an electrical current generating system comprising:
a fuel cell including an anode channel including an anode gas inlet and an anode gas outlet, a cathode channel including a cathode gas inlet and a cathode gas outlet, and an electrolyte in communication with the anode and cathode channel for facilitating ion exchange between the anode and cathode channel; and
an oxygen gas delivery system coupled to the cathode gas inlet for delivering a gaseous stream enriched in oxygen gas to the cathode channel, the oxygen gas delivery system including a rotary pressure swing adsorption system for enriching

Preferably the hydrogen gas delivery system includes a hydrogen gas inlet for receiving a first hydrogen gas feed from the anode gas outlet, and a hydrogen gas outlet coupled to the anode gas inlet for delivering hydrogen gas received from the first hydrogen gas feed to the anode channel with increased purity.

In a preferred implementation of the second embodiment, the oxygen gas delivery system comprises an oxygen pressure swing adsorption system, and the hydrogen gas delivery system comprises a reactor for producing a second hydrogen gas feed from hydrocarbon fuel, and the hydrogen pressure swing adsorption system is coupled to the reactor for purifying hydrogen gas received from the first and second hydrogen gas feeds. Both pressure swing adsorption systems include a rotary module having a stator and a rotor rotatable relative to the stator. The rotor includes a number of flow paths for receiving adsorbent material therein for preferentially adsorbing a first gas component in response to increasing pressure in the flow paths relative to a second gas component. The function compartments include a gas feed compartment and a heavy product compartment.

In one variation, the oxygen pressure swing adsorption system includes.a compressor coupled to the gas feed compartment for delivering pressurized air to the gas feed compartment, and a vacuum pump coupled to the compressor for extracting nitrogen product gas from the heavy product compartment The reactor comprises a steam reformer, including a burner, for producing syngas, and a water gas shift reactor coupled to the steam reformer for converting the syngas to the second hydrogen gas feed. The hydrogen pressure swing adsorption system includes a vacuum pump for delivering fuel gas from the heavy product compartment to the burner. The fuel gas is burned in the burner, and the heat generated therefrom is used to supply the endothermic heat of reaction necessary for the steam reformer reaction. The resulting syngas is delivered to the water gas shift reactor for removal of impurities, and then delivered as the second hydrogen gas feed to the hydrogen pressure swing adsorption system.

In another variation, the invention includes a burner for burning fuel. The reactor comprises an autothermal reformer for producing syngas, and a water gas shift reactor coupled to the autothermal reformer for converting the syngas to the second hydrogen gas feed. The compressor of the oxygen pressure swing adsorption system delivers pressurized air to the burner, and the heavy product gas is delivered from the hydrogen pressure swing adsorption system as tail gas to be burned in the burner. The compression machine of the oxygen pressure swing adsorption system also includes an expander coupled to the compressor for driving the compressor from hot gas of combustion emitted from the burner. Heat from the burner may also be used to preheat air and/or fuel supplied to the autothermal reformer.

According to a third embodiment, the present invention provides a method for generating an electric potential comprising the steps of:
providing a fuel cell including an anode channel including an anode gas inlet and an anode gas outlet, a cathode gas inlet and a cathode gas outlet, and an electrolyte in communicating with the anode and cathode channel for facilitating ion exchange between the anode and cathode channel; and
supplying a gaseous stream enriched in oxygen gas to the cathode gas inlet,
wherein the supplying step comprises the steps of supplying a first gas feed to a rotary pressure swing adsorption apparatus to produce a product gas stream enriched in oxygen gas, and delivering the product gas stream to the cathode gas inlet.

According to a fourth embodiment, the present invention provides a method for generating an electric potential comprising the steps of:
providing a fuel cell including an anode channel including an anode gas inlet and an anode gas outlet, a cathode gas inlet and a cathode gas outlet, and an electrolyte in communicating with the anode and cathode channel for facilitating ion exchange between the anode and cathode channel;
supplying a first gaseous stream enriched in hydrogen gas to the anode gas inlet, wherein the supplying step comprises the steps of supplying a first gas feed to a rotary hydrogen pressure swing adsorption apparatus to produce a first product gas stream enriched in hydrogen gas, and delivering the first product gas stream to the anode gas inlet; and
supplying a second gaseous stream enriched in oxygen gas to the cathode gas inlet

### BRIEF DESCRIPTION OF THE DRAWINGS

The preferred embodiment of the present invention will now be described, by way of example only, with reference to the drawings, in which:
Fig. 1 is a sectional view of a rotary PSA module suitable for use with the present invention, showing the stator and rotor situated in the stator;
Fig. 2 is a sectional view of the module of Fig. 1, with the stator deleted for clarity;
Fig. 3 is a sectional view of the stator shown in Fig. 1, with the rotor deleted for clarity;
Fig. 4 is an axial section of the module of Fig. 1;
Fig. 5 shows a typical PSA cycle attainable with the PSA system shown in Figs. 1 to 4;
Fig. 6 shows one variation of the PSA cycle with heavy reflux, attainable with the PSA system shown in Figs. 1 to 4;
Fig. 7 shows a pressure swing adsorption apparatus for separating oxygen gas from air, suitable for use with the present invention, and depicting the rotary module shown in Fig. 1 and a compression machine coupled to the rotary module;
Fig. 8 shows a pressure swing adsorption apparatus for purifying hydrogen gas, suitable for use with the present invention, and depicting the rotary module shown in Fig. 1 and a compression machine coupled to the rotary module;
Fig. 9 shows an electrical current generating system, according to a first embodiment of the present invention, including an oxygen-separating PSA system for supplying enriched oxygen to the fuel cell cathode channel with energy recovery from li ght reflux expansion to boost the pressure of oxygen circulating in the fuel cell cathode loop;
Fig. 10 shows a first variation of the electrical current generating system shown in Fig. 9, but with the PSA system including a countercurrent blowdown expander driving a free rotor exhaust vacuum pump for vacuum-PSA operation;
Fig.11 shows a second variation of the electrical current generating system shown in Fig. 9, with a portion of the oxygen enriched gas discharged from the fuel cell cathode being used for a pressurization step for the PSA system;
Fig. 12 shows an electrical current generating system, according to a second embodiment of the present invention, including an oxygen-separating PSA system for supplying enriched oxygen to the fuel cell cathode channel, and a hydrogen-separating PSA system for supplying enriched hydrogen to the fuel cell anode channel, with the hydrogen-separating PSA system receiving feed gas from a steam reformer; and
Fig. 13 shows an electrical current generating system, according to a variation of the electrical current generating system shown in Fig. 12, but with the hydrogen-separating PSA system receiving feed gas from an autothermal reformer.
Fig. 14 shows an electrical current generating system with carbon dioxide removal and oxygen enrichment for an alkaline fuel cell, and with an oxygen accumulator.

### DETAILED DESCRIPTION OF THE PREFERRED EMBODIMENTS

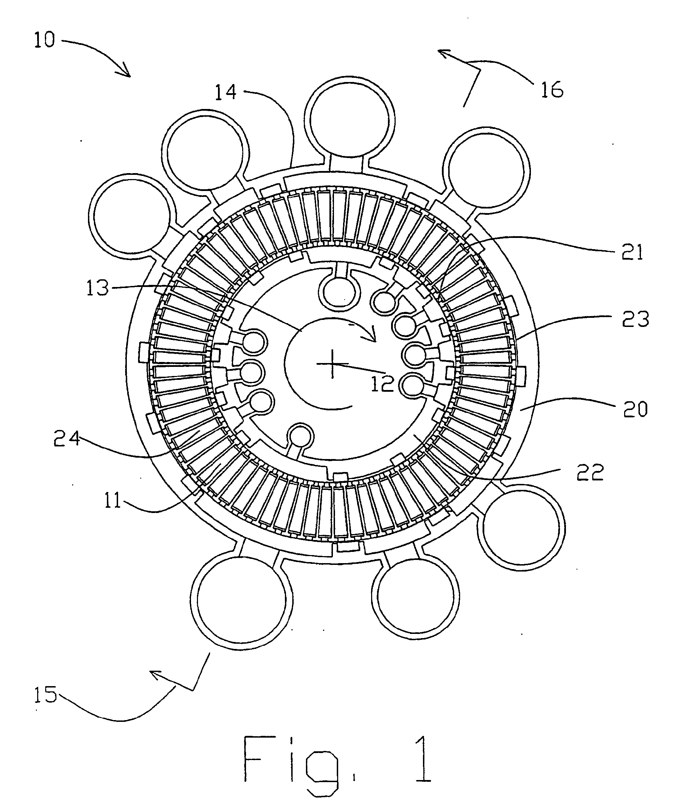

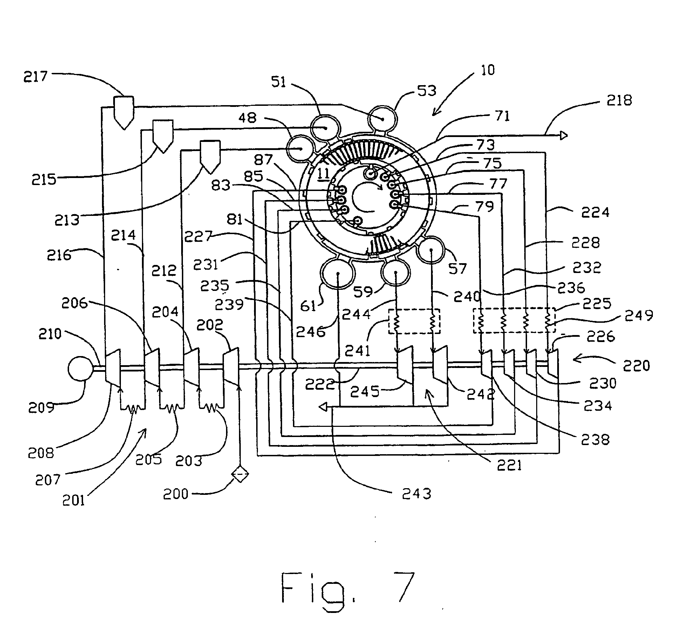

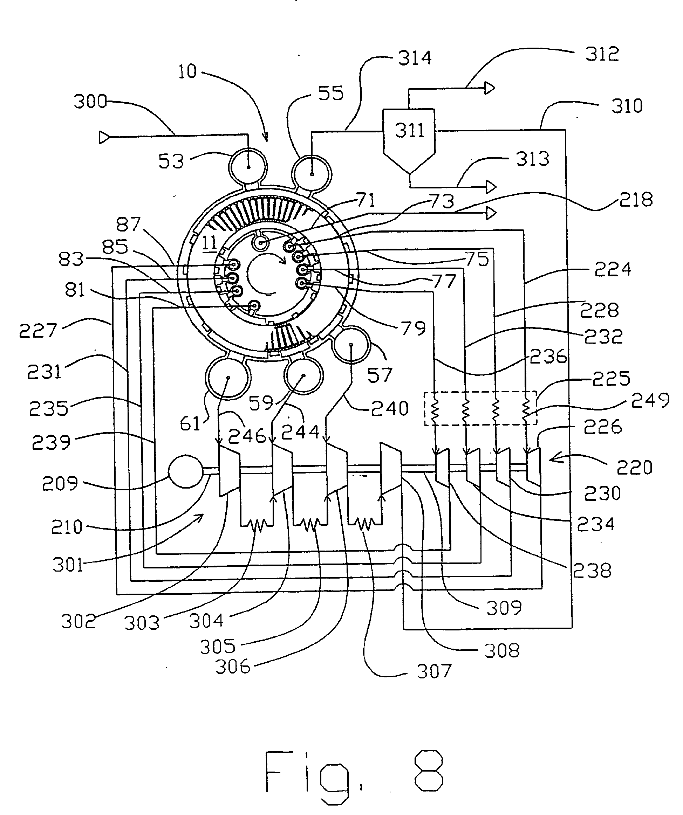

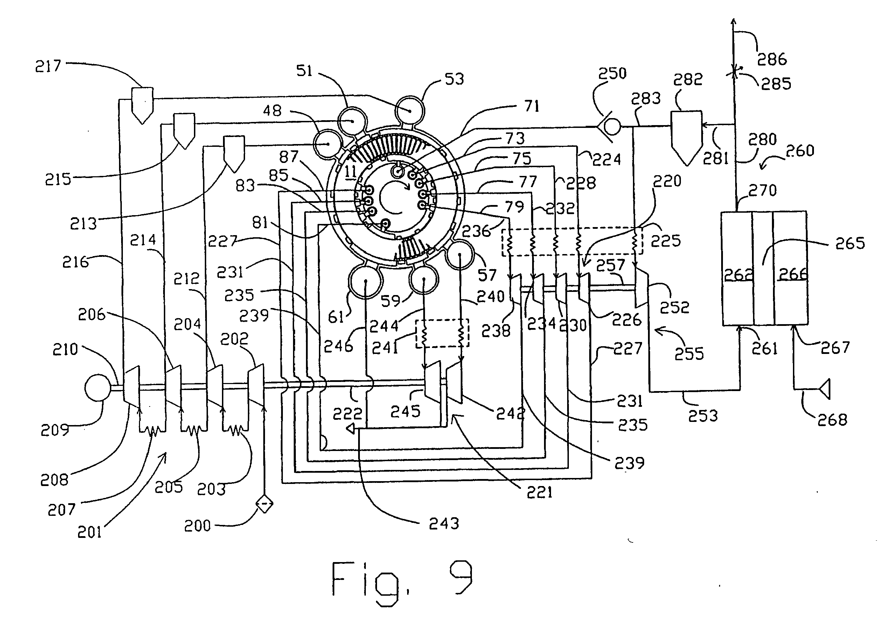

To aid in understanding the present invention, a pressure swing adsorption process and associated apparatus, suitable for use with the present invention, will be described first, with reference to Figs. 1 through 6. Thereafter, an oxygen-separating pressure swing adsorption system and a hydrogen-separating pressure swing adsorption system will be described with reference to Figs. 7 and 8 respectively. Two embodiments of the invention, together with variations thereon, will then be described commencing with Fig. 9.

### Figs.1, 2, 3 and 4

A rotary module 10 which is suitable for use as part of the present invention is shown in Figs. 1, 2, 3 and 4. The module includes a rotor 11 revolving about axis 12 in the direction shown by arrow 13 within stator 14.

In general, the rotary module 10 may be configured for flow through the adsorber elements in the radial, axial or oblique conical directions relative to the rotor axis. For operation at high cycle frequency, radial flow has the advantage that the centripetal acceleration will lie parallel to the flow path for most favourable stabilization of buoyancy-driven free convection, as well as centrifugal clamping of granular adsorbent with uniform flow distribution. On the other hand, axial flow configurations are preferred for small module capacities, whereas radial flow configurations are preferred for large module capacities.

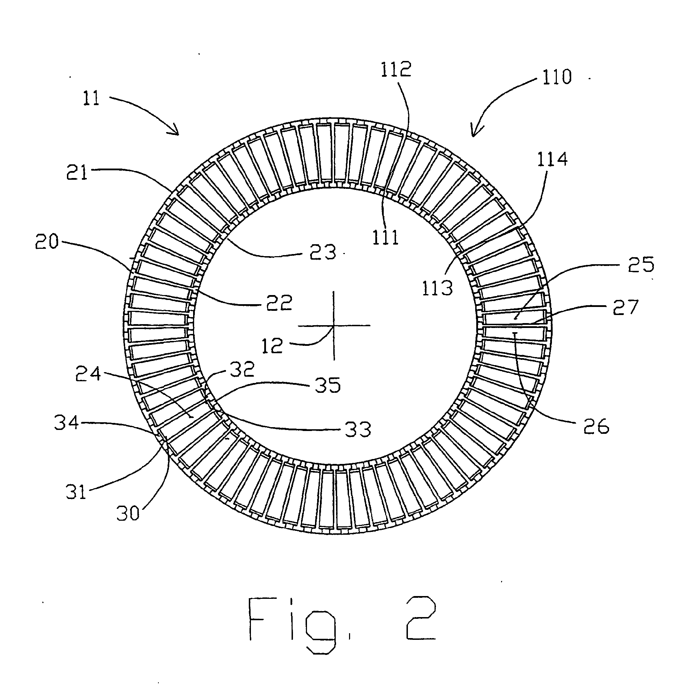

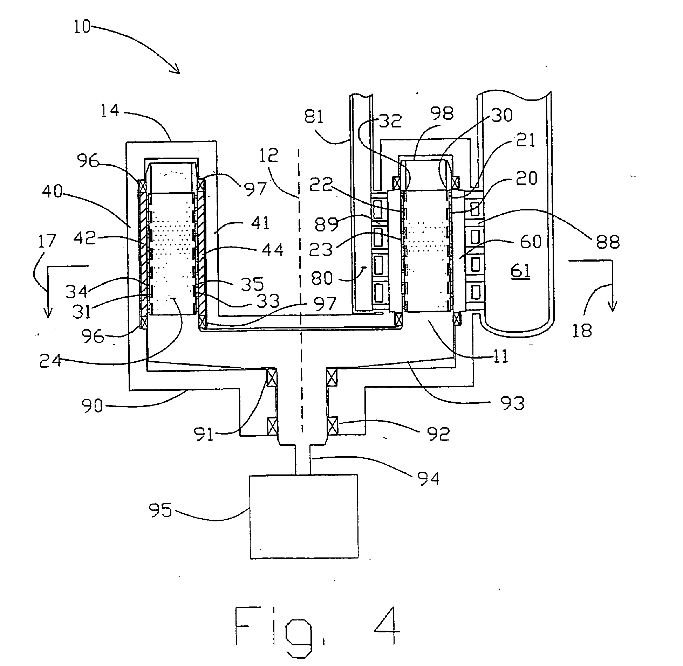

As shown in Fig. 2, the rotor 11 is of annular section, having concentrically to axis 12 an outer cylindrical wall 20 whose external surface is first valve surface 21, and an inner cylindrical wall 22 whose internal surface is second valve surface 23. The rotor has (in the plane of the section defined by arrows 15 and 16 in Fig. 4) a total of "N" radial flow adsorber elements 24. An adjacent pair of adsorber elements 25 and 26 are separated by partition 27 which is structurally and sealingly joined to outer wall 20 and inner wall 22. Adjacent adsorber elements 25 and 26 are angularly spaced relative to axis 12 by an angle of [360° / N]. Since the adsorber elements and the valve surfaces are thereby integrated into a single unit, and the adsorber elements are located in close proximity to the valve surfaces with minimal dead volume, the rotary module 10 is more compact and efficient than conventional PSA systems.

Adsorber element 24 has a first end 30 defined by support screen 31 and a second end 32 defined by support screen 33. The adsorber may be provided as granular adsorbent, whose packing voidage defines a flow path contacting the adsorbent between the first and second ends of the adsorber. Preferably the adsorber element is provided as an array of laminated thin sheets extending between the first and second ends of the adsorber, the sheets having an adsorbent such as a zeolite supported on a reinforcement matrix, and with flow channels established by spacers between the sheets. The laminated sheet adsorber, with sheet thickness of approximately 150 microns and using type X zeolites, has greatly reduced mass transfer and pressure drop resistances compared to conventional granular adsorbers, so that satisfactory oxygen enrichment operation has been achieved with PSA cycle periods in the order of 1 second and as low as 0.4 second. Consequently, the adsorbent inventory is radically reduced compared to conventional PSA cycle periods of about 1 minute, with the size of the module being smaller by some two orders of magnitude compared to conventional PSA equipment of equivalent capacity.. As a result, an exceptionally compact PSA module that can be used, rendering the invention particularly suitable for vehicular fuel cell power plants.

First aperture or orifice 34 provides flow communication from first valve surface 21 through wall 20 to the first end 30 of adsorber 24. Second aperture or orifice 35 provides flow communication from second valve surface 23 through wall 22 to the second end 31 of adsorber 24. Support screens 31 and 33 respectively provide flow distribution 32 between first aperture 34 and first end 30, and between second aperture 35 and second end 32, of adsorber element 24.

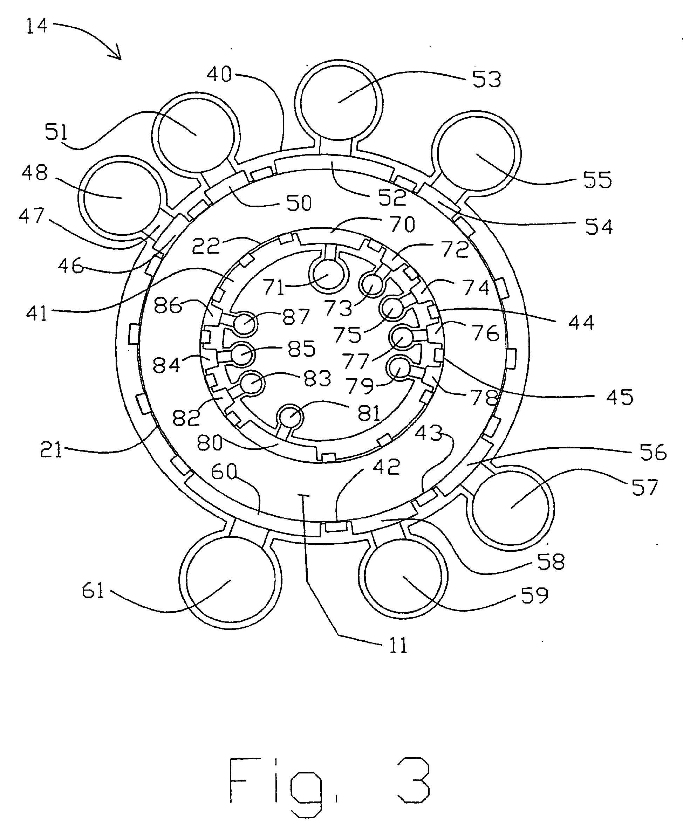

As shown in Fig. 3, stator 14 is a pressure housing including an outer cylindrical shell or first valve stator 40 outside the annular rotor 11, and an inner cylindrical shell or second valve stator 41 inside the annular rotor 11. Outer shell 40 carries axially extending strip seals (e.g. 42 and 43) sealingly engaged with first valve surface 21, while inner shell 41 carries axially extending strip seals (e.g. 44 and 45) sealingly engaged with second valve surface 23. Preferably, the azimuthal sealing width of the strip seals is greater than the diameters or azimuthal widths of the first and second apertures 34 and 35 opening through the first and second valve surfaces.

A set of first compartments in the outer shell each open in an angular sector to the first valve surface, and each provide fluid communication between its angular sector of the first valve surface and a manifold external to the module. The angular sectors of the compartments are much wider than the angular separation of the adsorber elements. The first compartments are separated on the first sealing surface by the strip seals (e.g. 42). Proceeding clockwise in Fig. 3, in the direction of rotor rotation, a first feed pressurization compartment 46 communicates by conduit 47 to first feed pressurization manifold 48, which is maintained at a first intermediate feed pressure. Similarly, a second feed pressurization compartment 50 communicates to second feed pressurization manifold 51, which is maintained at a second intermediate feed pressure higher than the first intermediate feed pressure but less than the higher working pressure.

For greater generality, module 10 is shown with provision for sequential admission of two feed mixtures, the first feed gas having a lower concentration of the more readily adsorbed component relative to the second feed gas. First feed compartment 52 communicates to first feed manifold 53, which is maintained at substantially the higher working pressure. Likewise, second feed compartment 54 communicates to second feed manifold 55, which is maintained at substantially the higher working pressure. A first countercurrent blowdown compartment 56 communicates to first countercurrent blowdown manifold 57, which is maintained at a first countercurrent blowdown intermediate pressure. A second countercurrent blowdown compartment 58 communicates to second countercurrent blowdown manifold 59, which is maintained at a second countercurrent blowdown intermediate pressure above the lower working pressure. A heavy product compartment 60 communicates to heavy product exhaust manifold 61 which is maintained at substantially the lower working pressure. It will be noted that compartment 58 is bounded by strip seals 42 and 43, and similarly all the compartments are bounded and mutually isolated by strip seals.

A set of second compartments in the inner shell each open in an angular sector to the second valve surface, and each provide fluid communication between its angular sector of the second valve surface and a manifold external to the module. The second compartments are separated on the second sealing surface by the strip seals (e.g. 44). Proceeding clockwise in Fig. 3, again in the direction of rotor rotation, light product compartment 70 communicates to light product manifold 71, and receives light product gas at substantially the higher working pressure, less frictional pressure drops through the adsorbers and the first and second orifices. According to the angular extension of compartment 70 relative to compartments 52 and 54, the light product may be obtained only from adsorbers simultaneously receiving the first feed gas from compartment 52, or from adsorbers receiving both the first and second feed gases.

A first light reflux exit compartment 72 communicates to first light reflux exit manifold 73, which is maintained at a first light reflux exit pressure, here substantially the higher working pressure less frictional pressure drops. A first cocurrent blowdown compartment 74 (which is actually the second light reflux exit compartment), communicates to second light reflux exit manifold 75, which is maintained at a first cocurrent blowdown pressure less than the higher working pressure. A second cocurrent blowdown compartment or third light reflux exit compartment 76 communicates to third light reflux exit manifold 77, which is maintained at a second cocurrent blowdown pressure less than the first cocurrent blowdown pressure. A third cocurrent blowdown compartment or fourth light reflux exit compartment 78 communicates to fourth light reflux exit manifold 79, which is maintained at a third cocurrent blowdown pressure less than the second cocurrent blowdown pressure.

A purge compartment 80 communicates to a fourth light reflux return manifold 81, which supplies the fourth light reflux gas which has been expanded from the third cocurrent blowdown pressure to substantially the lower working pressure with an allowance for frictional pressure drops. The ordering of light reflux pressurization steps is inverted from the ordering or light reflux exit or cocurrent blowdown steps, so as to maintain a desirable "last out - first in" stratification of light reflux gas packets. Hence a first light reflux pressurization compartment 82 communicates to a third light reflux return manifold 83, which supplies the third light reflux gas which has been expanded from the second cocurrent blowdown pressure to a first light reflux pressurization pressure greater than the lower working pressure. A second light reflux pressurization compartment 84 communicates to a second light reflux return manifold 85, which supplies the second light reflux gas which has been expanded from the first cocurrent blowdown pressure to a second light reflux pressurization pressure greater than the first light reflux pressurization pressure. Finally, a third light reflux pressurization compartment 86 communicates to a first light reflux return manifold 87, which supplies the first light reflux gas which has been expanded from approximately the higher pressure to a third light reflux pressurization pressure greater than the second light reflux pressurization pressure, and in this example less than the first feed pressurization pressure.

Additional details are shown in Fig. 4. Conduits 88 connect first compartment 60 to manifold 61, with multiple conduits providing for good axial flow distribution in compartment 60. Similarly, conduits 89 connect second compartment 80 to manifold 81. Stator 14 has base 90 with bearings 91 and 92. The annular rotor 11 is supported on end disc 93, whose shaft 94 is supported by bearings 91 and 92. Motor 95 is coupled to shaft 94 to drive rotor 11. The rotor could alternatively rotate as an annular drum, supported by rollers at several angular positions about its rim and also driven at its rim so that no shaft would be required. A rim drive could be provided by a ring gear attached to the rotor, or by a linear electromagnetic motor whose stator would engage an arc of the rim. Particularly for hydrogen separation applications, the rotor drive may be hermetically enclosed within the stator housing to eliminate hazards related to seal leakage. Outer circumferential seals 96 seal the ends of outer strip seals 42 and the edges of first valve surface 21, while inner circumferential seals 97 seal the ends of inner strip seals 44 and the edges of second valve surface 23. Rotor 11 has access plug 98 between outer wall 20 and inner wall 22, which provides access for installation and removal of the adsorbent in adsorbers 24.

### Figs. 5 and 6

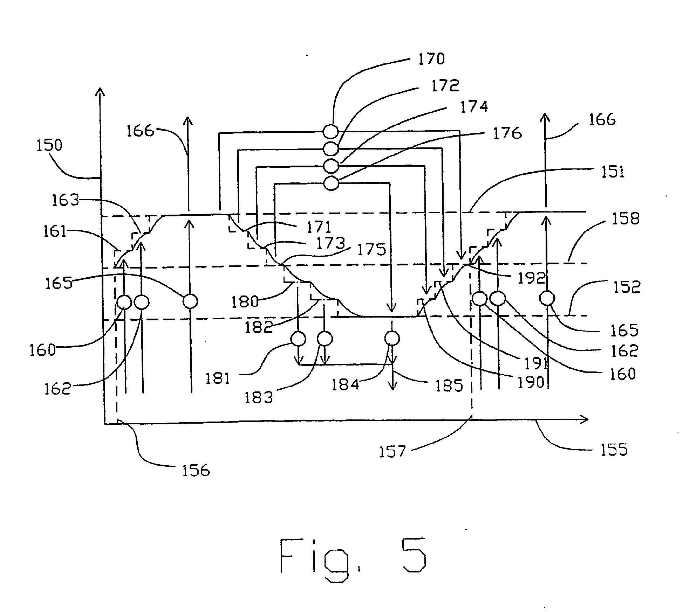

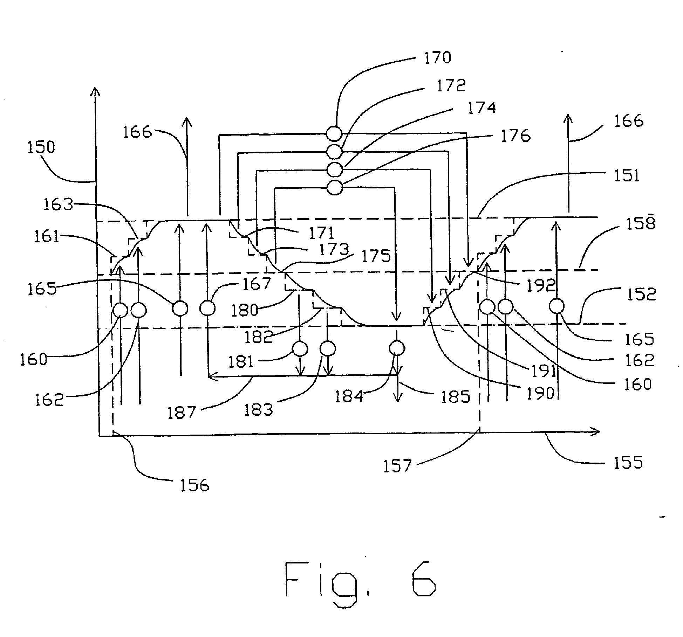

Fig. 5 shows a typical PSA cycle which would be obtained using the foregoing gas separation system, while Fig. 6 shows a similar PSA cycle with heavy reflux recompression of a portion of the first product gas to provide a second feed gas to the process.

In Figs. 5 and 6, the vertical axis 150 indicates the working pressure in the adsorbers and the pressures in the first and second compartments. Pressure drops due to flow within the adsorber elements are neglected. The higher and lower working pressures are respectively indicated by dotted lines 151 and 152. The lower working pressure may be nominally or approximately ambient atmospheric pressure, or may be a subatmospheric pressure established by vacuum pumping. The higher working pressure may typically be in the range of twice to four times the lower working pressure, based on the ratio of absolute pressures.

The horizontal axis 155 of Figs. 5 and 6 indicates time, with the PSA cycle period defined by the time interval between points 156 and 157. At times 156 and 157, the working pressure in a particular adsorber is pressure 158. Starting from time 156, the cycle for a particular adsorber (e.g. 24) begins as the first aperture 34 of that adsorber is opened to the first feed pressurization compartment 46, which is fed by first feed supply means 160 at the first intermediate feed pressure 161. The pressure in that adsorber rises from pressure 158 at time 157 to the first intermediate feed pressure 161. Proceeding ahead, first aperture passes over a seal strip, first closing adsorber 24 to compartment 46 and then opening it to second feed pressurization compartment 50 which is feed by second feed supply means 162 at the second intermediate feed pressure 163. The adsorber pressure rises to the second intermediate feed pressure.

First aperture 34 of adsorber 24 is opened next to first feed compartment 52, which is maintained at substantially the higher pressure by a third feed supply means 165. Once the adsorber pressure has risen to substantially the higher working pressure, its second aperture 35 (which has been closed to all second compartments since time 156) opens to light product compartment 70 and delivers light product 166.

In the cycle of Fig. 6, first aperture 34 of adsorber 24 is opened next to second feed compartment 54, also maintained at substantially the higher pressure by a fourth feed supply means 167. In general, the fourth feed supply means supplies a second feed gas, typically richer in the more readily adsorbed component than the first feed gas provided by the first, second and third feed supply means. In the specific cycle illustrated in Fig. 6, the fourth feed supply means 167 is a "heavy reflux" compressor, recompressing a portion of the heavy product back into the apparatus. In the cycle illustrated in Fig. 5, there is no fourth feed supply means, and compartment 54 couldbe eliminated or consolidated with compartment 52 extended over a wider angular arc of the stator.

While feed gas is still being supplied to the first end of adsorber 24 from either compartment 52 or 54, the second end of adsorber 24 is closed to light product compartment 70 and opens to first light reflux exit compartment 72 while delivering "light reflux" gas (enriched in the less readily adsorbed component, similar to second product gas) to first light reflux pressure let-down means (or expander) 170. The first aperture 34 of adsorber 24 is then closed to all first compartments, while the second aperture 35 is opened successively to (a) second light reflux exit compartment 74, dropping the adsorber pressure to the first cocurrent blowdown pressure 171 while delivering light reflux gas to second light reflux pressure letdown means 172, (b) third light reflux exit compartment 76, dropping the adsorber pressure to the second cocurrent blowdown pressure 173 while delivering light reflux gas to third light reflux pressure letdown means 174, and (c) fourth light reflux exit compartment 78, dropping the adsorber pressure to the third cocurrent blowdown pressure 175 while delivering light reflux gas to fourth light reflux pressure letdown means 176. Second aperture 35 is then closed for an interval, until the light reflux return steps following the countercurrent blowdown steps.

The light reflux pressure let-down means may be mechanical expanders or expansion stages for expansion energy recovery, or may be restrictor orifices or throttle valves for irreversible pressure let-down.

Either when the second aperture is closed after the final light reflux exit step (as shown in Figs. 5 and 6), or earlier while light reflux exit steps are still underway, first aperture 34 is opened to first countercurrent blowdown compartment 56, dropping the adsorber pressure to the first countercurrent blowdown intermediate pressure 180 while releasing "heavy" gas (enriched in the more strongly adsorbed component) to first exhaust means 181. Then, first aperture 34 is opened to second countercurrent blowdown compartment 58, dropping the adsorber pressure to the first countercurrent blowdown intermediate pressure 182 while releasing heavy gas to second exhaust means 183. Finally reaching the lower working pressure, first aperture 34 is opened to heavy product compartment 60, dropping the adsorber pressure to the lower pressure 152 while releasing heavy gas to third exhaust means 184. Once the adsorber pressure has substantially reached the lower pressure while first aperture 34 is open to compartment 60, the second aperture 35 opens to purge compartment 80, which receives fourth light reflux gas from fourth light reflux pressure let-down means 176 in order to displace more heavy gas into first product compartment 60.

In Fig. 5, the heavy gas from the first, second and third exhaust means is delivered as the heavy product 185. In Fig. 6, this gas is partly released as the heavy product 185, while the balance is redirected as "heavy reflux" 187 to the heavy reflux compressor as fourth feed supply means 167. Just as light reflux enables an approach to high purity of the less readily adsorbed ("light") component in the light product, heavy reflux enables an approach to high purity of the more readily adsorbed ("heavy") component in the heavy product so that high recovery of the less readily adsorbed ("light") product can be achieved.

The adsorber is then repressurized by light reflux gas after the first and second apertures close to compartments 60 and 80. In succession, while the first aperture 34 remains closed at least initially, (a) the second aperture 35 is opened to first light reflux pressurization compartment 82 to raise the adsorber pressure to the first light reflux pressurization pressure 190 while receiving third light reflux gas from the third light reflux pressure letdown means 174, (b) the second aperture 35 is opened to second light reflux pressurization compartment 84 to raise the adsorber pressure to the second light reflux pressurization pressure 191 while receiving second light reflux gas from the second light reflux pressure letdown means 172, and (c) the second aperture 35 is opened to third light reflux pressurization compartment 86 to raise the adsorber pressure to the third light reflux pressurization pressure 192 while receiving first light reflux gas from the first light reflux pressure letdown means 170. Unless feed pressurization has already been started while light reflux return for light reflux pressurization is still underway, the process (as based on Figs. 5 and 6) begins feed pressurization for the next cycle after time 157 as soon as the third light reflux pressurization step has been concluded.

The pressure variation waveform in each adsorber would be a rectangular staircase if there were no throttling in the first and second valves. Such throttling is needed to smooth pressure and flow transients. In order to provide balanced performance, preferably all of the adsorber elements and the apertures are closely identical to each other.

The rate of pressure change in each pressurization or blowdown step will be restricted by throttling in ports (or in clearance or labyrinth sealing gaps) of the first and second valve means, or by throttling in the apertures at first and second ends of the adsorbers, resulting in the typical pressure waveform depicted in Figs. 5 and 6. Alternatively, the apertures may be opened slowly by the seal strips, to provide flow restriction throttling between the apertures and the seal strips, which may have narrow tapered clearance channels so that the apertures are only opened to full flow gradually. Excessively rapid rates of pressure change would subject the adsorber to mechanical stress, while also causing flow transients which would tend to increase axial dispersion of the concentration wavefront in the adsorber. Pulsations of flow and pressure are minimized by having a plurality of adsorbers simultaneously transiting each step of the cycle, and by providing enough volume in the function compartments and associated manifolds so that they act effectively as surge absorbers between the compression machinery and the first and second valve means.

It will be evident that the cycle could be generalized in many variations by having more or fewer intermediate stages in each major step of feed pressurization, countercurrent blowdown exhaust, or light reflux. Ifdesired, combined feed and product pressurization steps (or combined cocurrent and countercurrent blowdown steps) at intermedi ate pressures may be performed from both first and second valves simultaneously. The pressure at which feed pressurization begins, may differ from the pressure at which countercurrent blowdown begins. Furthermore, in air separation or air purification applications, a stage of feed pressurization (typically the first stage) could be performed by equalization with atmosphere as an intermediate pressure of the cycle. Similarly, a stage of countercurrent blowdown could be performed by equalization with atmosphere as an intermediate pressure of the cycle.

### Fig. 7

Fig. 7 is a simplified schematic of a PSA system for separating oxygen from air using nitrogen-selective zeolite adsorbents. The light product is concentrated oxygen, while the heavy product is nitrogen-enriched air usually vented as waste. The cycle lower pressure 152 is illustrated as nominally atmospheric pressure, although a vacuum pressure 152 could be used as will be illustrated in Fig. 8. Feed air is introduced through filter intake 200 to a feed compressor 201. The feed compressor includes compressor first stage 202, intercooler 203, compressor second stage 204, second intercooler 205, compressor third stage 206, third intercooler 207, and compressor fourth stage 208. The feed compressor 201 as described may be a four stage axial compressor with motor 209 as prime mover coupled by shaft 210. The intercoolers are optional. With reference to Fig. 5, the feed compressor first and second stages are the first feed supply means 160, delivering feed gas at the first intermediate feed pressure 161 via conduit 212 and water condensate separator 213 to first feed pressurization manifold 48. Feed compressor third stage 206 is the second feed supply means 162, delivering feed gas at the second intermediate feed pressure 163 via conduit 214 and water condensate separator 215 to second feed pressurization manifold 51. Feed compressor fourth stage 208 is the third feed supply means 165, delivering feed gas at the higher pressure 151 via conduit 216 and water condensate separator 217 to feed manifold 53. Light product oxygen flow is delivered from light product manifold 71 by conduit 218, maintained at substantially the higher pressure less frictional pressure drops.

The PSA system of Fig. 7 includes energy recovery expanders, including light reflux expander 220 (here including four stages) and countercurrent blowdown expander 221 (here including two stages), coupled to feed compressor 201 by shaft 222. The expander stages may be provided for example as radial inflow turbine stages, as full admission axial turbine stages with separate wheels, or as partial admission impulse turbine stages combined in a single wheel.

Light reflux gas from first light reflux exit manifold 73 flows at the higher pressure via conduit 224 and heater 225 to first light pressure letdown means 170 which here is first light reflux expander stage 226, and then flows at the third light reflux pressurization pressure 192 by conduit 227 to the first light reflux return manifold 87. Light reflux gas from second light reflux exit manifold 75 flows at the first cocurrent blowdown pressure 171 via conduit 228 and heater 225 to second light reflux pressure letdown means 172, here the second expander stage 230, and then flows at the second light reflux pressurization pressure 191 by conduit 231 to the second light reflux return manifold 85. Light reflux gas from third light reflux exit manifold 77 flows at the second cocurrent blowdown pressure 173 via conduit 232 and heater 225 to third light reflux pressure letdown means 174, here the third expander stage 234, and then flows at the first light reflux pressurization pressure 190 by conduit 235 to the third light reflux return manifold 83. Finally, light reflux gas from fourth light reflux exit manifold 79 flows at the third cocurrent blowdown pressure 175 via conduit 236 and heater 225 to fourth light reflux pressure letdown means 176, here the fourth light reflux expander stage 238, and then flows at substantially the lower pressure 152 by conduit 239 to the fourth light reflux return manifold 81.

Heavy countercurrent blowdown gas from first countercurrent blowdown manifold 57 flows at first countercurrent blowdown intermediate pressure 180 by conduit 240 to heater 241 and thence to first stage 242 of the countercurrent blowdown expander 221 as first exhaust means 181, and is discharged from the expander to exhaust manifold 243 at substantially the lower pressure 152. Countercurrent blowdown gas from second countercurrent blowdown manifold 59 flows at second countercurrent blowdown intermediate pressure 182 by conduit 244 to heater 241 and thence to second stage 245 of the countercurrent blowdown expander 221 as second exhaust means 183, and is discharged from the expander to exhaust manifold 243 at substantially the lower pressure 152. Finally, heavy gas from heavy product exhaust manifold 61 flows by conduit 246 as third exhaust means 184 to exhaust manifold 243 delivering the heavy product gas 185 to be vented at substantially the lower pressure 152.

Optional heaters 225 and 241 raise the temperatures of gases entering expanders 220 and 221, thus augmenting the recovery of expansion energy and increasing the power transmitted by shaft 222 from expanders 220 and 221 to feed compressor 201, and reducing the power required from prime mover 209. While heaters 225 and 241 are means to provide heat to the expanders, intercoolers 203, 205 and 207 are means to remove heat from the feed compressor and serve to reduce the required power of the higher compressor stages. The intercoolers 203, 205, 207 are optional features.

If light reflux heater 249 operates at a sufficiently high temperature so that the exit temperature of the light reflux expansion stages is higher than the temperature at which feed gas is delivered to the feed manifolds by conduits 212, 214 and 216, the temperature of the second ends 35 of the adsorbers 24 may be higher than the temperature of their first ends 34. Hence, the adsorbers have a thermal gradient along the flow path, with higher temperature at their second end relative to the first end. This is an extension of the principle of"thermally coupled pressure swing adsorption" (TCPSA), introduced by Keefer in U.S. Patent No. 4,702,903. Adsorber rotor 11 then acts as a thermal rotary regenerator, as in regenerative gas turbine engines having a compressor 201 and an expander 220. Heat provided to the PSA process by heater 225 assists powering the process according to a regenerative thermodynamic power cycle, similar to advanced regenerative gas turbine engines approximately realizing the Ericsson thermodynamic cycle with intercooling on the compression side and interstage heating on the expansion side. In the instance of PSA applied to oxygen separation from air, the total light reflux flow is much less than the feed flow because of the strong bulk adsorption of nitrogen. Accordingly the power recoverable from the expanders is much less than the power required by the compressor, but will still contribute significantly to enhanced efficiency of oxygen production.

If high energy efficiency is not of highest importance, the light reflux expander stages and the countercurrent blowdown expander stages may be replaced by restrictor orifices or throttle valves for pressure letdown. The schematic of Fig. 7 shows a single shaft supporting the compressor stages, the countercurrent blowdown or exhaust expander stages, and the light reflux stages, as well as coupling the compressor to the prime mover. However, it should be understood that separate shafts and even separate prime movers may be used for the distinct compression and expansion stages within the scope of the present invention.

### Fig. 8

Fig. 8 shows a vacuum-PSA system, also with heavy product reflux as could be used to achieve high recovery in hydrogen purification for a fuel cell power plant. The raw hydrogen may be provided in certain stationary applications from chemical process or petroleum refinery offgases. However, in most fuel cell applications, the raw hydrogen gas feed will be provided by processing of a hydrocarbon or carbonaceous fuel, e.g. by steam reforming of natural gas, or by autothermal reforming or partial oxidation ofliquid fuels. Such hydrogen feed gases typically contain 30% to 74% hydrogen. Using typical adsorbents such as zeolites, carbon dioxide, carbon monoxide, nitrogen and hydrogen sulphide or other trace impurities will be much more readily adsorbed than hydrogen, so the purified hydrogen will be the light product delivered at the higher working pressure which may be only slightly less than the feed supply pressure, while the impurities will be concentrated as the heavy product and will be exhausted from the PSA process as "PSA tail gas" at the lower working pressure. This tail gas will be used as fuel gas for the fuel processing reactions to generate hydrogen, or else for a combustion turbine to power PSA compression machinery for the fuel cell power plant.

The PSA system of Fig. 8 has infeed conduit 300 to introduce the feed gas at substantially the higher pressure to first feed manifold 53. In this example, all but the final pressurization steps are achieved with light reflux gas, with the final feed pressurization step being achieved through manifold 55.

The PSA system includes a multistage vacuum pump 301 driven by prime mover 209 through shaft 210, and optionally by light reflux expander 220 through shaft 309. The vacuum pump 301 includes a first stage 302 drawing heavy gas by conduit 246 from first product exhaust manifold 61, and compressing this gas through intercooler 303 to second stage 304. Vacuum pump second stage 304 draws heavy gas from second countercurrent blowdown manifold 59 through conduit 244, and delivers this gas by intercooler 305 to third stage 306 which also draws heavy gas from first countercurrent blowdown manifold 57 through conduit 240. The vacuum pump stage 306 compresses the heavy gas to a pressure sufficiently above ambient pressure for a portion of this gas (heavy product gas or PSA tail gas) to be delivered for use as fuel gas in heavy product delivery conduit 307. The remaining heavy gas proceeds from vacuum pump 301 to heavy reflux compressor 308 which attains substantially the higher working pressure of the PSA cycle.

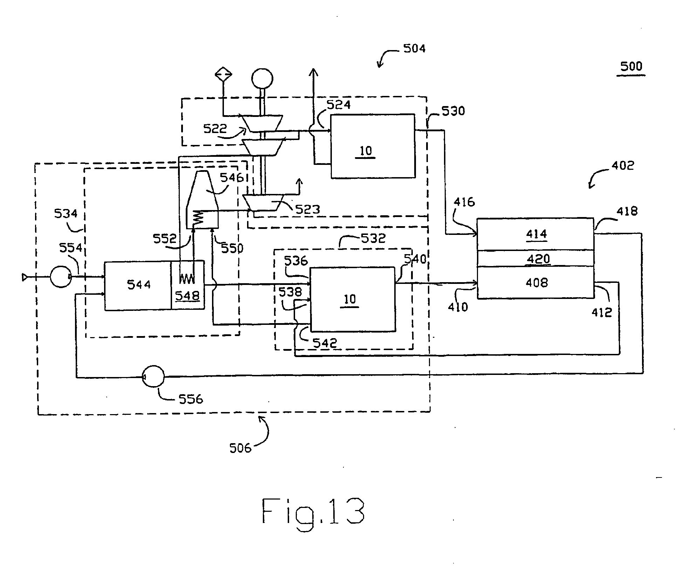

The compressed heavy gas is conveyed from compressor fourth stage 308 by conduit 310 to condensate separator 311. If desired (as for combustion in an expansion turbine as in the embodiment of Fig. 13), the entire heavy product stream could be compressed through compressor 308, so that the heavy product fuel gas may be delivered at the highest working pressure by alternative heavy product delivery conduit 312 which is externally maintained at substantially the higher pressure less frictional pressure drops. Condensed vapours (such as water) are removed through conduit 313 at substantially the same pressure as the heavy product in conduit 312. The remaining heavy gas flow, after removal of the first product gas, flows by conduit 314 to the second feed manifold 55 as heavy reflux to the adsorbers following the feed step for each adsorber. The heavy reflux gas is a second feed gas, of higher concentration in the more readily adsorbed component or fraction than the first feed gas.

### Figs. 9 and 10

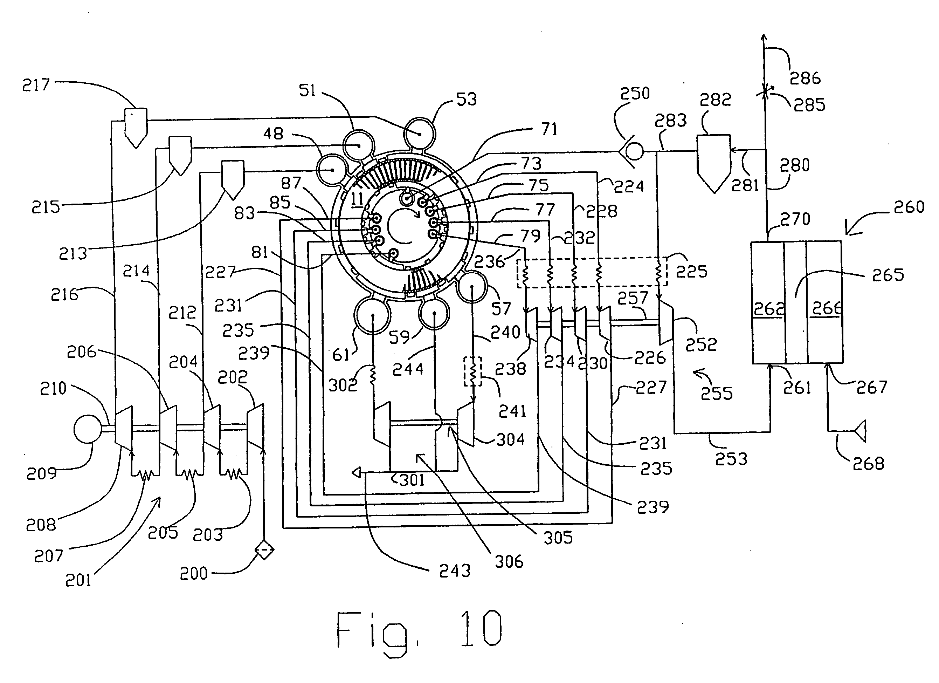

Turning now to Figs. 9 and 10, fuel cell-based electrical current generating systems, according to a first embodiment of the present invention, are shown using a rotary PSA system similar to that shown in Fig. 7 as the basic building block. However, it should be understood that the invention is not limited to electrical current generating systems having rotary PSA modules. Rather other arrangements may be employed without departing from the scope of the invention.

In Fig. 9, the PSA system separates oxygen from air, using nitrogen-selective zeolite adsorbents, as previously described. The light product is concentrated oxygen, while the heavy product is nitrogen-enriched air usually vented as waste. The cycle lower pressure 152 is nominally atmospheric pressure, unless an optional vacuum pump is provided as in Fig. 8. Feed air is introduced through filter intake 200 to a feed compressor 201. The feed compressor includes compressor first stage 202, compressor second stage 204, compressor third stage 206, and compressor fourth stage 208. The feed compressor 201 as described may be a four stage axial compressor with motor 209 as prime mover coupled by shaft 210. The compressor stages may be in series as shown, or alternatively in parallel. Intercoolers between compressor stages are optional. The feed compressor first and second stages deliver feed gas at the first intermediate feed pressure 161 via conduit 212 and water condensate separator 213 to first feed pressurization manifold 48. Feed compressor third stage 206 delivers feed gas at the second intermediate feed pressure 163 via conduit 214 and water condensate separator 215 to second feed pressurization manifold 51. Feed compressor fourth stage 208 delivers feed gas at the higher pressure 151 via conduit 216 and water condensate separator 217 to feed manifold 53. Light product oxygen flow is delivered from light product manifold 71 by conduit 218, maintained at substantially the higher pressure less frictional pressure drops.

The apparatus of Fig. 9 includes energy recovery expanders, including light reflux expander 220 (here including four stages) and countercurrent blowdown expander 221 (here including two stages). Expander 221 is coupled to feed compressor 201 by shaft 222. The expander stages may be provided for example as radial inflow turbine stages, as full admission axial turbine stages with separate wheels, or as partial admission turbine stages combined in a single wheel. If high energy efficiency were not of highest importance, the light reflux expander stages and/or the countercurrent blowdown expander stages could be replaced by restrictor orifices or throttle valves for pressure letdown.

Light reflux gas from first light reflux exit manifold 73 flows at the higher pressure via conduit 224 and heater 225 to first light reflux expander stage 226, and then flows at the third light reflux pressurization pressure 192 by conduit 227 to the first light reflux return manifold 87. Light reflux gas from second light reflux exit manifold 75 flows at the first cocurrent blowdown pressure 171 via conduit 228 and heater 225 to the second expander stage 230, and then flows at the second light reflux pressurization pressure 191 by conduit 231 to the second light reflux return manifold 85. Light reflux gas from third light reflux exit manifold 77 flows at the second cocurrent blowdown pressure 173 via conduit 232 and heater 225 to the third expander stage 234, and then flows at the first light reflux pressurization pressure 190 by conduit 235 to the third light reflux return manifold 83. Finally, light reflux gas from fourth light reflux exit manifold 79 flows at the third cocurrent blowdown pressure 175 via conduit 236 and heater 225 to the fourth light reflux expander stage 238, and then flows at substantially the lower pressure 152 by conduit 239 to the fourth light reflux return manifold 81.

Heavy countercurrent blowdown gas from first countercurrent blowdown manifold 57 flows at first countercurrent blowdown intermediate pressure 180 by conduit 240 to heater 241 and thence to first stage 242 of the countercurrent blowdown expander 221, and is discharged from the expander to exhaust manifold 243 at substantially the lower pressure 152. Countercurrent blowdown gas from second countercurrent blowdown manifold 59 flows at second countercurrent blowdown intermediate pressure 182 by conduit 244 to heater 241 and thence to second stage 245 of the countercurrent blowdown expander 221, and is discharged from the expander to exhaust manifold 243 at substantially the lower pressure 152. Finally, heavy gas from heavy product exhaust manifold 61 flows by conduit 246 to exhaust manifold 243 delivering the heavy product gas 185 to be vented at substantially the lower pressure 152.

Optional heaters 225 and 241 raise the temperatures of gases entering expanders 220 and 221, thus augmenting the recovery of expansion energy and increasing the power transmitted by shaft 222 from expanders 220 and 221 to feed compressor 201, and reducing the power required from prime mover 209.

In the instance of PSA applied to oxygen separation from air, the total light reflux flow is much less than the feed flow because of the strong bulk adsorption of nitrogen. Accordingly the power recoverable from the expanders is much less than the power required by the compressor, but will still contribute significantly to enhanced efficiency of oxygen production. By operating the adsorbers at moderately elevated temperature (e.g. 40° to 60° C) and using strongly nitrogen-selective adsorbents such as Ca-X, Li-X or lithium chabazite zeolites, the PSA oxygen generation system can operate with favourable performance and efficiency. Calcium or strontium exchanged chabazite may be used at higher temperatures, even in excess of 100° C, reflecting the extraordinary capacity of these adsorbents for nitrogen, their nitrogen uptake being too close to saturation at lower temperatures near ambient for satisfactory operation.

While higher temperature of the adsorbent will reduce nitrogen uptake and selectivity for each zeolite adsorbent, the isotherms will be more linear and humidity rejection will be easier: Working with adsorbents such as Ca-X and Li-X, recent conventional practice has been to operate ambient temperature PSA at subatmospheric lower pressures in so-called "vacuum swing adsorption" (VSA), so that the highly selective adsorbents operate well below saturation in nitrogen uptake, and have a large working capacity in a relatively linear isotherm range. At higher temperatures, saturation in nitrogen uptake is shifted to more elevated pressures, so the optimum PSA cycle higher and lower pressures are also shifted upward.

The enriched oxygen product gas is delivered by conduit 218, non-return valve 250, and conduit 251 to the inlet of oxygen product compressor 252 which boosts the pressure of product oxygen delivered by conduit 253. Compressor 252 may be a single stage centrifugal compressor, driven directly through shaft 254 by light reflux expander 220 or alternatively by a motor. Light reflux expander 220 may be the sole power source to compressor 252, in which case expander 220 and compressor 252 together constitute a free rotor turbo-booster 255. Since the working fluid in both expander 220 and compressor 252 is enriched oxygen, the free rotor turbo-booster embodiment has the important safety feature of not requiring a shaft seal to an external motor. Preferably, energy recovered from light reflux expansion is used to raise the delivery pressure of the light product, here oxygen.

The compressed enriched oxygen is delivered to a fuel cell 260, by conduit 253 to cathode inlet 261 of fuel cell cathode channel 262. Fuel cell 260 may be of the polymer electrolyte membrane (PEM), with the electrolyte 265 separating cathode channel 262 from anode channel 266. Hydrogen fuel is supplied to anode inlet 267 of anode channel 266 by hydrogen infeed conduit 268.

The enriched oxygen passes through cathode channel 262 to cathode exit 270, as a fraction of the oxygen reacts with hydrogen ions crossing the membrane to generate electrical power and reacting to form byproduct water. The cathode exit gas leaving the cathode channel in conduit 280 from cathode exit 270 (in this preferred embodiment) is still significantly enriched in oxygen relative to ambient air concentration of approximately 21 %. A minor portion of this gas is purged as cathode purge gas from conduit 280 by purge valve 285 and purge exhaust 286, and the balance of the cathode exit gas is retained as cathode recycle gas. The cathode recycle gas is conveyed by conduit 281 to water condensate separator 282 where excess liquid water is removed from the cathode exit gas, which remains saturated in water vapour. The humid cathode recycle gas is then blended with incoming enriched oxygen from the PSA system by conduit 283 connecting to conduit 251.

Conduits 251,253,280,281 and 283 thus form a cathode loop with cathode channel 262, compressor 252 and water condensate separator 282. Heat exchanger 225 may cool the oxygen enriched gas to be compressed by compressor 252, by removing waste heat from the fuel cell cathode loop to heat light reflux gas before expansion in expander 220. Enough of the cathode exit gas is purged by purge valve 285 to avoid excessive build-up of argon and nitrogen impurities in the cathode loop. In a practicable example, the product oxygen concentration in conduit 218 may be 90% oxygen, with equal amounts of argon and nitrogen impurities. With a small purge flow, oxygen concentrations at cathode inlet 261 and at cathode exit 270 may be respectively 60% and 50%.

As discussed above, a PEM fuel cell operating with atmospheric air as oxidant may typically require air compression to at least 3 atmospheres in order to achieve a sufficiently high oxygen partial pressure over the cathode for competitive current density in the fuel cell stack. Oxygen concentration at the cathode inlet would be 21 %, and at the cathode exit typically only about 10% oxygen. The present invention can achieve much higher average oxygen concentration over the fuel cell cathode channel, e.g. 55% compared to approximately 15%. Hence, the operating pressure may be reduced to about 1.5 atmospheres while still retaining a substantial enhancement of oxygen partial pressure over the cathode. With higher oxygen partial pressure over the cathode, fuel cell stack power density and efficiency can be enhanced, as is particularly crucial in automotive power plant applications. Mechanical compression power required by the apparatus of the present invention (using high performance adsorbents such as Li-X) will be less than that required for the air compressor of a PEM fuel cell system operating at 3 atmospheres air supply pressure, further enhancing overall power plant efficiency.

An important benefit in this example apparatus is that the oxygen enriched gas entering cathode inlet 261 is humidified by blending with the much larger stream of saturated cathode recycle gas. Another benefit is that energy recovery from the PSA unit can be applied to boost pressure and drive recycle circulation in the cathode loop, while fuel cell waste heat can be applied to heat exchangers 225 and 241 to enhance expansion energy recovery in the PSA unit. Yet another benefit is that suitable cathode channel circulation flow velocities to assure satisfactory water removal from PEM fuel cells are readily achieved.

Turning to Fig. 10, an oxygen-separating PSA-based fuel cell system is shown, similar to the fuel cell system of Fig. 9, but with a countercurrent blowdown expander driving a free rotor exhaust vacuum pump. In the embodiment of Fig. 10, shaft 222 coupling the countercurrent blowdown expander 221 to feed compressor 201 has been removed. Instead, vacuum pump 301 is used to depress the low pressure of the cycle below atmospheric pressure; drawing nitrogen-enriched waste gas from heavy product exhaust compartment 61 via conduit 246 and optional heater 302. Pump 301 is powered by countercurrent blowdown expander 304 expanding countercurrent blowdown gas from first countercurrent blowdown manifold 57 via conduit 240 and optional heater 241. Vacuum pump 301 and expander 304 are coupled by shaft 305, and together constitute a free rotor vacuum pump assembly 306. Such a free rotor vacuum pump offers attractive advantages of efficiency and capital cost. Alternatively, a motor could be coupled to an extension of shaft 305.

The countercurrent blowdown gas from second countercurrent blowdown manifold 59 exits that manifold at a pressure which is substantially atmospheric or slightly greater according to the amount of throttling restriction associated with conduit 244.

### Fig. 11

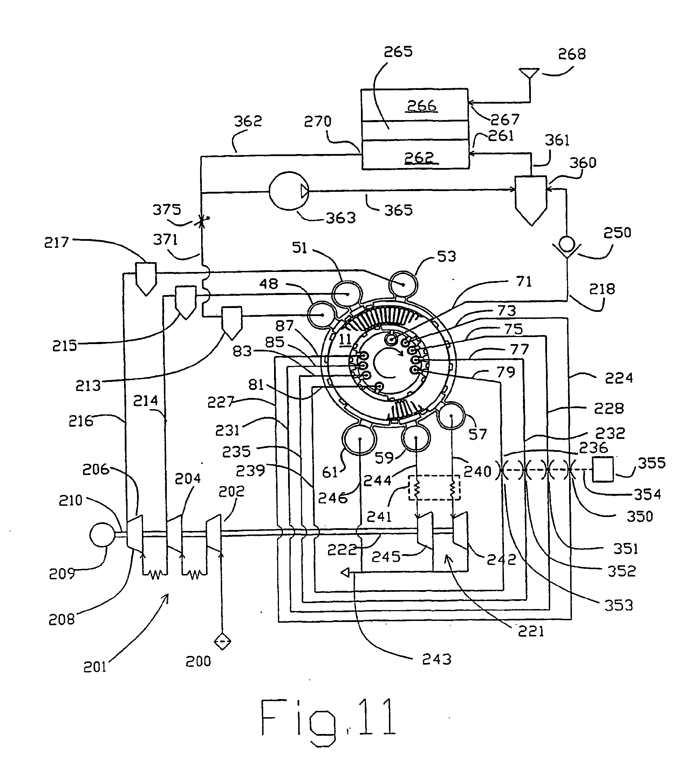

Fig. 11 shows a fuel cell-based electrical current generating system, similar to the electrical current generating system of Fig. 9, but without light reflux energy recovery, and with a portion of oxygen enriched gas discharged from the fuel cell cathode being used for a pressurization step. The illustrative four stages of light reflux pressure letdown are achieved irreversibly over adjustable orifices 350, 351, 352 and 353 which respectively connect conduits 224 and 227, 228 and 231, 232 and 235, and 236 and 239. Orifices 350, 351, 352 and 353 are actuated through linkage 354 by actuator(s) 355. Adjustment of the orifices is desirable to enable turndown of the PSA apparatus to operation at reduced cycle frequency and reduced flow rates when the fuel cell power plant is operated at part load.

The fuel cell has a cathode recycle loop defined (in the loop flow direction) by water condensate separator 360, conduit 361 conveying enriched oxygen to cathode channel inlet 261, cathode channel 262, conduit 362 conveying cathode exhaust gas from cathode channel exit 270 to cathode recycle conduit 365 including cathode recycle blower 363 to repressurize the cathode recycle gas for admission to condensate separator 360. Separator 360 removes fuel cell water exhaust condensate from the cathode recycle loop, while also humidifying the dry concentrated oxygen admitted from the PSA system conduit from conduit 218.

A portion of the cathode exhaust is removed from conduit 362 by conduit 371, branching from cathode recycle conduit 365. This portion of the cathode exhaust gas is recycled to the feed end of the PSA (or alternatively vacuum-PSA) apparatus, and is conveyed by conduit 371 to water condensate separator 373 and thence to first pressurization manifold 48 communicating to the first valve face 21. A throttle valve 375 may be provided in conduit 371 to provide a pressure letdown as required from the pressure at cathode exit 270 to first pressurization manifold 48.

Recycling a portion of the cathode exhaust gas to the PSA unit feed has several advantages, including (1) reducing the volume of feed gas to be compressed, (2) eliminating the requirement to purge any cathode exhaust gas from the cathode loop, and (3) recovering some waste energy from the fuel cell cathode loop by using this gas to help pressurize the fuel cell from the feed end. This oxygen rich gas must be admitted to the feed end of the PSA unit, because it is saturated with water vapour which would deactivate the adsorbent if admitted directly to the second valve face at the product end. By introducing it to the feed end of the beds after the low pressure step and before any direct pressurization with feed air, a favourable concentration profile is established since this gas is richer in oxygen than feed air, but also contains a greater load of impurities than the product oxygen-enriched gas.

Because argon is concentrated with oxygen by the PSA unit, argon will be concentrated both within the cathode loop and in the PSA enriched oxygen product in this embodiment. If no cathode purge is provided, argon can only exit the system through the exhaust of the PSA unit. Since the PSA unit typically achieves about 60% recovery of oxygen and argon when ordinary air is used as the only feed for pressurization to the first valve face, about 40% of argon admitted with feed gas may be exhausted in each cycle. The fractional elimination of recycle argon introduced with initial feed pressurization steps will be lower, since the main feed is introduced subsequently to push the recycle argon deeper into the adsorbers. Hence, a small amount of purge from the cathode loop may be desirable. Cathode exhaust gas recycle to the PSA unit feed may also be blended directly with feed air introduced at the same or lower pressure as the cathode channel exit 270.

### Fig. 12

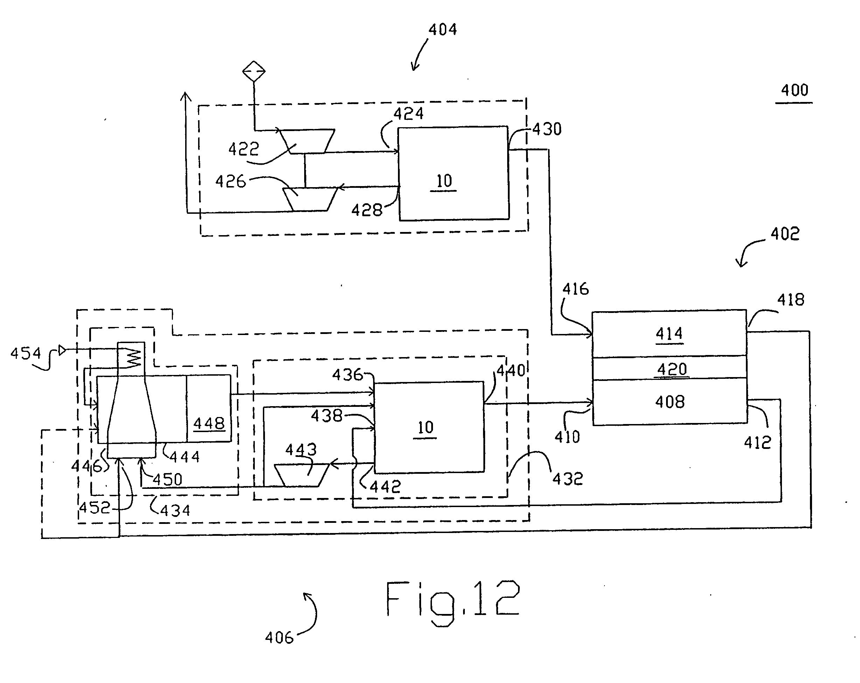

Fig. 12 shows a fuel-cell based electrical current generating system 400, according to a second embodiment of the present invention, comprising a fuel cell 402, an oxygen-generating PSA system 404, and a hydrogen gas production system 406. The fuel cell comprises an anode channel 408 including an anode gas inlet 410 and an anode gas outlet 412, a cathode channel 414 including a cathode gas inlet 416 and a cathode gas outlet 418, and a PEM 420 in communication with the anode channel 408 and the cathode channel 414 for facilitating ion exchange between the anode channel 408 and the cathode channel 414.

The oxygen-PSA system 404 extracts oxygen gas from feed air, and comprises a rotary module 10, and a compressor 422 for delivering pressurized feed air to the feed compartments 424 of the rotary module 10. Preferably, the oxygen-PSA system 404 includes a vacuum pump 426 (or alternatively countercurrent blowdown expander) coupled to the compressor 422 for withdrawing nitrogen-enriched gas as heavy product gas from the blowdown compartments 428 of the rotary module 10. The oxygen-PSA system 404 also includes a light product gas function compartment 430 coupled to the cathode gas inlet 416 for delivering oxygen-enriched gas to the cathode channel 414. Cathode recycle may be provided as in the embodiments of Figs. 9 - 11.

The hydrogen gas production system 406 comprises a hydrogen-generating PSA system 432, and a fuel processor reactor 434 coupled to the hydrogen-PSA system 432 for supplying a first hydrogen gas feed to the hydrogen-PSA system 432. The hydrogen-PSA system 432 comprises a rotary module 10 including a first feed gas compartment 436 for receiving a first hydrogen gas feed from the reactor 434, a pressurization compartment 438 for receiving a hydrogen gas feed from the anode gas outlet 412, a light product compartment 440 for delivering hydrogen gas to the anode gas inlet 410, and a blowdown compartment 441 for delivering tail gas as heavy product gas to the reactor 434. Preferably the hydrogen-PSA system 432 includes a vacuum pump 442 (or alternately a countercurrent blowdown expander) provided between the blowdown compartment 441 and the reactor 434 for extracting the tail gas from the blowdown compartment 441.

According to the purity level of the hydrogen gas recycled from the anode gas exit 412, pressurization compartment 438 may cooperate with either the first or second valve of the rotary module, the latter being preferred if the purity of this stream is relatively high. The hydrogen-PSA system 432 may also include a heavy reflux compressor 443 delivering heavy reflux gas to a second feed gas compartment 444 to improve the fractional recovery of hydrogen gas. The calorific fuel gas requirements of the hydrogen gas production system 406 will determine the correct recovery of hydrogen gas.

The reactor 434 comprises a steam reformer 445, including a burner 446 and catalyst tubes (not shown), and a water gas shift reactor 448. The burner 446 includes a first burner inlet 450 for receiving the tail gas from the blowdown compartment 442, and a second burner inlet 452 for receiving air or humid oxygen-enriched gas from the cathode channel 414. The steam reformer 444 is supplied through a fuel inlet 454 with a hydrocarbon fuel, such as methane gas, plus water at a feed pressure which is the working pressure of the fuel cell plus an allowance for pressure drops through the system 406. The fuel is preheated and steam is generated by heat exchanger 455, recovering heat from the flue gas of burner 446. The methane fuel gas and steam mixture is then passed through the catalyst tubes, while the tail gas and the oxygen-enriched gas are burned in the burner 446 to elevate the temperature of the methane fuel gas mixture to the temperature necessary (typically 800°C) for conducting endothermic steam reforming reactions of the methane fuel gas mixture:

CH₄ + H₂O → CO + 3H₂

CH₄ + 2H₂O → CO₂ + 4H₂

The resulting syngas (approximately 70% H₂, with equal amounts of CO and CO₂ as major impurities, and unreacted CH₄ and N₂ as minor impurities) is cooled to about 250°C, and then passed to the water gas shift reactor 448 for reacting most of the CO with steam to produce more H₂ and CO₂:

CO + H₂O → CO₂ + H₂

The resulting gas reactants are then conveyed to the first feed compartment 436 of the hydrogen-PSA system 432 for hydrogen purification, with the heavy product tail gas being returned to the steam reformer 434 from the blowdown compartment 442 for combustion in the burner 446.

In one variation, the reactor 434 comprises a partial oxidation reactor, and instead of the methane gas mixture being steam reformed, the methane gas mixture is reacted in the partial oxidation reactor with a portion of the humid oxygen-enriched gas received from the cathode channel 414, through an optional conduit 456, for partial oxidation of the methane gas:

CH₄ + ½O₂ → CO + 2H₂

The resulting syngas is again cooled to about 250°C, and then passed to the water gas shift reactor 448 for reacting most of the CO with steam to produce more H₂ and CO₂:

CO + H₂O → CO₂ + H₂

The resulting gas reactants are then conveyed to the first feed compartment 436 of the hydrogen-PSA system 432 for hydrogen purification, with the heavy product tail gas being purged from the hydrogen-PSA system 432.

In another variation, the reactor 434 comprises an autothermal reformer and a water gas shift reactor 448, and instead of the methane gas mixture being endothermically steam reformed or exothermically partially oxidized, the methane gas mixture is reacted in the autothermal reformer by a thermally balanced combination of those reactions, followed by reaction in the water gas shift reactor 448. Since the hydrogen-PSA heavy product tail gas will always have some fuel value even in the limit of very high heavy reflux, a burner 446 would be provided for efficiently preheating air and or fuel feeds to an autothermal reactor. Unless the fuel processing reactions include an endothermic reforming component as an energy-efficient sink for tail gas fuel combustion, another economic use (as in the embodiment of Fig. 13) should be provided if the net fuel processing reactions are highly endothermic, as in the case of simple partial oxidation.

### Fig. 13

It will be apparent that a deficiency of the electrical current generating system 400 relates to the necessity of driving the compressor 422 and the vacuum pumps 426, 444 with a portion of the electrical power generated by the fuel cell. Fig. 13 shows a fuel-cell based electrical current generating system 500, which addresses this deficiency.

The electrical current generating system 500 is substantially similar to the electrical current generating system 400, comprising the fuel cell 402, an oxygen-generating PSA system 504, and a hydrogen gas production system 506. The oxygen-PSA system 504 extracts oxygen gas from feed air, and comprises a rotary module 10, a compressor 522 for delivering pressurized feed air to the feed compartments 524 of the rotary module 10, a combustion expander 523 coupled to the compressor 522, a starter motor (not shown) coupled to the compressor 522, and a light product gas function compartment 530 coupled to the cathode gas inlet 416 for delivering oxygen-enriched gas to the cathode channel 414. The oxygen-PSA system 504 may also have a countercurrent blowdown or heavy product exhaust compartment 531 cooperating with a vacuum pump and/or expander, as illustrated in previous embodiments.

The hydrogen gas production system 506 comprises a hydrogen-generating PSA system 532, and a reactor 534 coupled to the hydrogen-PSA system 532 for supplying a first hydrogen gas feed to the hydrogen-PSA system 532. The hydrogen-PSA system 532 comprises a rotary module 10 including a first feed gas compartment 536 for receiving a first hydrogen gas feed from the steam reformer 534, a pressurization compartment 538 (communicating with either the first or second valve) for receiving a second hydrogen gas feed from the anode gas outlet 412, a light product compartment 540 for delivering hydrogen gas to the anode gas inlet 410, and a blowdown compartment 541 for delivering tail gas as heavy product fuel gas to the reactor 534. As in previous embodiments, the blowdown compartment 541 may cooperate with an exhaust vacuum pump and/or expander (not shown) for extracting the tail gas from the blowdown compartment 541.

The reactor 534 comprises an autothermal reformer 544, a burner 546, and a water gas shift reactor 548. The burner 546 includes heater tubes 549, a first burner inlet 550 for receiving the tail gas from the blowdown compartment 542, and a second burner inlet 552 for receiving compressed air from the compressor 522 second stage. As will be apparent from Fig. 13, the compressor 522 second stage compresses a portion of the feed air which is not delivered to the oxygen-generating PSA system 504.

The expander 523 and the compressor 522 together comprise a gas turbine, and expands combustion product gas emanating from the burner 546 so as to increase the pressure of feed air to the feed compartments 524. As will be appreciated, the thermal energy of combustion of the hydrogen-PSA tail gas is used to drive the fuel cell accessory gas purification and compression machinery. As shown in Fig. 13, additional feed gas compression energy may be obtained from the exothermic heat of reaction of the water gas shift reactor 548 through preheat exchangers 555..

The autothermal reformer 544 is supplied through a fuel inlet 554 with a hydrocarbon fuel gas, such as methane gas and, in the example shown, is reacted with oxygen-enriched gas received under pressure from the cathode channel 414 through booster blower 556. Cathode recycle may not be justified, or at least may be reduced, if the oxygen-enriched gas delivered from the cathode exit can be used advantageously for fuel processing (to reduce nitrogen load and enhance combustion). The resultant syngas is then cooled, and then passed to the water gas shift reactor 548 for reacting most of the CO with steam to produce more H₂ and CO₂. The resulting gas reactants are then conveyed to the first feed compartment 536 of the hydrogen-PSA system 532 for hydrogen purification.

### Fig. 14

Embodiment 600 illustrates further aspects of the invention. For alkaline fuel cells, the crucial problem is removal of CO₂ from both feed oxidant and hydrogen streams. The oxygen-PSA and hydrogen-PSA systems of this invention as described above will remove CO₂ very effectively, since CO₂ is much more strongly adsorbed than other permanent gas impurities. Oxygen enrichment is beneficial for all types of fuel cells in increasing voltage efficiency, although not usually justified except at high current densities. Alkaline fuel cells can use an under-sized oxygen-PSA for very effective carbon dioxide removal along with modest oxygen enrichment, or may use the same PSA device with an adsorbent lacking nitrogen/oxygen selectivity (e.g. activated carbon, or high silica zeolites) for carbon dioxide clean-up without oxygen enrichment. The rotary PSA module and compression machinery of this invention are entirely suitable for this role.

Alkaline fuel cells operating on ambient air feed typically operate near atmospheric pressure, at about 70°C. Under such conditions, the water vapour saturated cathode exhaust stream of nitrogen-enriched air serves to remove fuel cell product water while maintaining electrolyte water balance. Operation of alkaline fuel cells at higher temperature may be desirable for high efficiency with less costly electrocatalyst materials, or else for thermal integration to a methanol reformer using fuel cell waste heat to vapourize reactants and even drive the endothermic reaction. But with increasing stack exhaust temperatures, operation with ambient air composition may rapidly become impracticable. At higher temperatures, the nitrogen rich cathode exhaust simply carries too much water vapour out of the system, unless the total pressure is uneconomically raised or else a condenser for water recovery is included.

With oxygen enrichment, the volume of the cathode exhaust can be adjusted to achieve water balance for any alkaline fuel cell. Reasonable low stack working pressures become practicable, e.g. about 3 atmospheres for a cathode exit temperature of 120°C. If oxygen enrichment is carried out to the full capability of oxygen-PSA, e.g. approaching 95% oxygen purity, the cathode exhaust stream becomes dry steam with a modest concentration of permanent gases. This steam product may be useful for diverse applications, including fuel processing of hydrocarbon feedstocks to generate hydrogen.

Embodiment 600 shows an oxygen-PSA (also performing CO₂ removal) as shown in Fig. 12. The hydrogen side of the system is simplified in this example to show only the anode gas inlet of pure hydrogen. Oxygen at more than 90% purity is supplied to the cathode gas inlet 416, while concentrated water vapour is delivered from cathode gas exit 418 and conveyed directly to steam expander 610. Expander 610 discharges to vacuum condenser 612, from which liquid condensate is removed by pump 614, while the permanent gas overheads are withdrawn through conduit by vacuum pump 426 of the oxygen-PSA. Expander 610 may assist motor 616 to drive the compression machinery of the oxygen-PSA, thus improving overall efficiency of the fuel power plant by approximately 2 to 3 %.

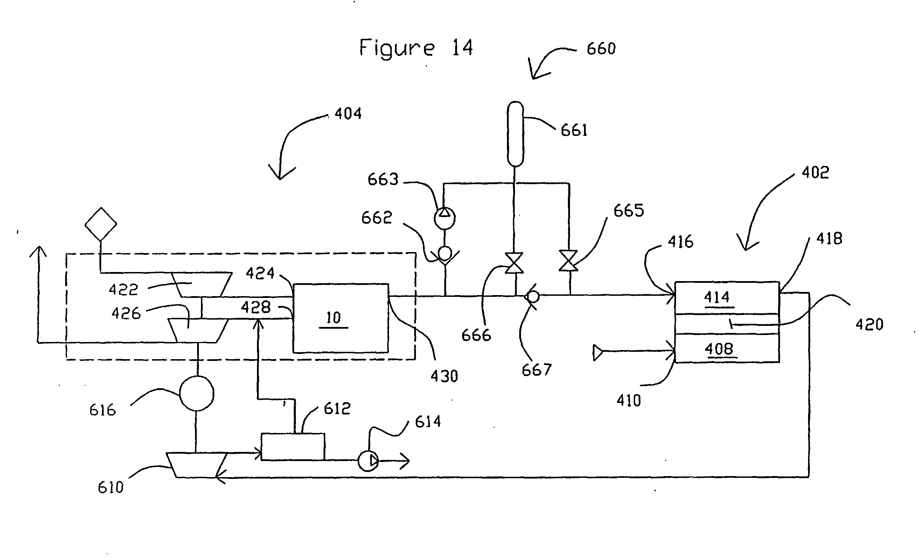

A final aspect of the invention (for any type of fuel cell) is the optional provision of light product gas accumulators for the PSA units, and particularly for the oxygen-PSA as illustrated in Fig. 14. Oxygen product accumulator 660 includes an oxygen storage vessel 661 charged from the light product compartment 430 through non-return valve 662, at substantially the upper pressure of the PSA process or optionally at an elevated pressure generated by a small accumulator charging compressor 663. A peaking oxygen delivery valve 665 and a backflush valve 666 are provided on either side of non-return valve 667 so as to enable oxygen delivery from the storage vessel respectively forward to the fuel cell cathode inlet or backward to the oxygen-PSA unit.

The oxygen storage vessel is charged during normal operation, particularly during intervals of stand-by or idling when the oxygen-PSA attains highest oxygen purity. The optional charging compressor may be operated when the plant is idling, or (in vehicle applications) as an energy load application of regenerative braking. The peaking oxygen delivery valve 665 is opened during intervals of peak power demand, so as to increase supply of concentrated oxygen to the cathode when most needed. If the oxygen accumulator is large enough, the oxygen-PSA compressor 422 and vacuum pump 426 could be idled during brief intervals of peak power demand, so as to release the power normally consumed by internal accessories to meet external demand. Then, the size of the fuel cell stack (in a power plant required to meet occasional specified peak power levels) can be reduced for important cost savings.

When the fuel cell power plant is shut down, the oxygen-PSA compressor 422 is stopped first to drop the internal pressure for an initial blowdown of all adsorbers. Then, backflush valve 666 is opened to release a purging flow of oxygen to displace adsorbed nitrogen and some adsorbed water vapour from the adsorbers over a short time interval. The adsorbers are then left precharged with dry oxygen at atmospheric pressure, thus enabling fast response of the oxygen-PSA for the next plant start-up.

The foregoing description is intended to be illustrative of the preferred embodiments of the present invention. Those of ordinary skill may envisage certain additions, deletions and/or modifications to the described embodiments which, although not specifically described or referred to herein, do not depart from the scope of the present invention as defined by the appended claims.

## Claims

1. An electrical current generating system comprising:
a fuel cell including an anode channel including an anode gas inlet and an anode gas outlet, a cathode channel including a cathode gas inlet and a cathode gas outlet, and an electrolyte in communication with the anode and cathode channel for facilitating ion exchange between the anode and cathode channel; and
an oxygen gas delivery system coupled to the cathode gas inlet for delivering a gaseous stream enriched in oxygen gas to the cathode channel, the oxygen gas delivery system including a rotary pressure swing adsorption system for enriching oxygen in a gaseous feed.

2. The current generating system according to claim 1, wherein the pressure swing adsorption system includes a first feed gas inlet for receiving air feed as a first gas feed, and a gas outlet coupled to the cathode gas inlet

3. The current generating system according to claim 2, wherein the oxygen gas delivery system includes a gas inlet for receiving a first portion of cathode gas exhausted from the cathode channel and a gas outlet for delivering the gaseous stream enriched in oxygen gas to the cathode channel.

4. The current generating system according to claim 3, wherein the oxygen gas delivery system includes a first gas recirculation means coupled to the cathode gas outlet for recirculating the first portion of cathode gas exhausted from the cathode channel to the cathode gas inlet.

5. The current generating system according to claim 4, wherein the first gas recirculation means comprises a compressor for supplying the first cathode exhaust gas portion under pressure to the cathode gas inlet.

6. The current generating system according to claim 5, wherein the first gas recirculation means includes a condensate separator coupled between the cathode gas outlet and the compressor for removing moisture from the first cathode exhaust gas portion.

7. The current generating system according to claim 6, wherein the gas recirculation means directs the first cathode exhaust gas portion as a second feed gas to a second feed gas inlet of the rotary pressure swing adsorption system.

8. The current generating system according to claim 7, wherein the rotary pressure swing adsorption system comprises a rotary module including a stator and a rotor rotatable relative to the stator, the rotor including a plurality of flow paths for receiving adsorbent material therein for preferentially adsorbing a first gas component in response to increasing pressure in the flow paths relative to a second gas component, and compression machinery coupled to the rotary module for facilitating gas flow through the flow paths for separating the first gas component from the second gas component.

9. The current generating system according to claim 8, wherein the stator includes a first stator valve surface, a second stator valve surface, a plurality of first function compartments opening into the first stator valve surface, and a plurality of second function compartments opening into the second stator valve surface, and the rotor includes a first rotor valve surface in communication with the first stator valve surface, a second rotor valve surface in communication with the second stator valve surface, and a plurality of apertures provided in the rotor valve surfaces and in communication with respective ends of the flow paths and the function compartments.

10. The current generating system according to claim 9, wherein the compression machinery is coupled to a portion of the function compartments for maintaining the portion of function compartments at a plurality of discrete respective pressure levels between an upper pressure and a lower pressure for maintaining uniform gas flow through the portion of function compartments.

11. The current generating system according to claim 9, wherein the function compartments include a light reflux exit compartment and a light reflux return compartment, the compression machinery comprises a light reflux expander coupled between the light reflux exit and return compartments; and the first gas recirculation means comprises a compressor coupled to the light reflux expander for supplying the first cathode exhaust gas portion under pressure to the cathode gas inlet.

12. The current generating system according to claim 11, wherein the rotary pressure swing adsorption system includes a heater disposed between the light reflux exit compartment and the light reflux expander for enhancing recovery of energy from light reflux gas exhausted from the light reflux exit compartment.

13. The current generating system according to claim 11, wherein the function compartments include a gas feed compartment and a countercurrent blowdown compartment, and the compression machinery comprises a compressor coupled to the first feed gas inlet for delivering compressed air to the gas feed compartment, and an expander coupled to the compressor for exhausting heavy product gas enriched in the first gas component from the countercurrent blowdown compartment.

14. The current generating system according to claim 11, wherein the function compartments include a countercurrent blowdown compartment and a heavy product compartment, and the compression machinery comprises an expander coupled to the countercurrent blowdown compartment, and a vacuum pump coupled to the expander for extracting heavy product gas enriched in the first gas component at subatmospheric pressure from the heavy product compartment.

15. The current generating system according to claim 9, wherein the function compartments include a gas feed compartment, and the gas recirculating means directs the first cathode exhaust gas portion as feed gas to the gas feed compartment.

16. The current generating system according to claim 9, wherein the function compartments include a gas feed compartment, and the current generating system includes second gas recirculating means coupled to the cathode gas outlet for recirculating a second portion of the cathode exhaust gas to the gas feed compartment.

17. The current generating system according to claim 16, wherein the second gas recirculating means comprises a restrictor orifice.

18. The current generating system according to claim 8, wherein the adsorbent material is one of Ca-X, Li-X, lithium chabazite zeolite, calcium-exchanged chabazite and strontium-exchanged chabazite.

19. The current generating system according to claim 1, wherein the rotary pressure swing adsorption system enriches oxygen and removes carbon dioxide from an air feed.

20. The current generating system according to claim 19 further comprising a hydrogen gas delivery system coupled to the anode gas inlet.

21. The current generating system according to claim 20, wherein the hydrogen gas delivery system enriches hydrogen in a gaseous feed.

22. The current generating system according to claim 21, further including an oxygen accumulator interposed between the oxygen gas delivery system and the cathode gas inlet.

23. The current generating system according to claim 22, in which the electrolyte is alkaline and is maintained at a working temperature greater than about 100°C, the oxygen gas delivery system is operated to supply oxygen of about 90% purity to the cathode gas inlet, so that the product water of the fuel cell is delivered as concentrated dry steam from the cathode gas outlet; the system including a steam expander to expand the steam from the cathode gas outlet to a vacuum condenser, a condensate pump to exhaust liquid from the condenser, and a vacuum pump cooperating with the oxygen pressure swing adsorption system and exhausting permanent gas overheads from the vacuum condenser.

24. The current generating system according to claim 7, wherein the rotary pressure swing adsorption system comprises a rotary module for implementing a pressure swing adsorption process having an operating pressure cycling between an upper pressure and a lower pressure for extracting a first gas fraction and a second gas fraction from a gas mixture including the first and second fractions, the rotary module comprising:
a stator including a first stator valve surface, a second stator valve surface, a plurality of first function compartments opening into the first stator valve surface, and a plurality of second function compartments opening into the second stator valve surface; and
a rotor rotatably coupled to the stator and including a first rotor valve surface in communication with the first stator valve surface, a second rotor valve surface in communication with the second stator valve surface, a plurality of flow paths for receiving adsorbent material therein, each said flow path including a pair of opposite ends, and a plurality of apertures provided in the rotor valve surfaces and in communication with the flow path ends and the functions ports for cyclically exposing each said flow path to a plurality of discrete pressure levels between the upper and lower pressures for maintaining uniform gas flow through the first and second function compartments;
wherein the function compartments comprise first and second gas feed compartments opening into the first stator valve surface for delivering the gas mixture to the flow paths and for sequentially exposing the flow paths to the second feed gas prior to the first feed gas.

25. The current generating system according to claim 24, wherein the second feed gas is enriched in oxygen relative to the first feed gas.

26. An electrical current generating system comprising:
a fuel cell including an anode channel including an anode gas inlet and an anode gas outlet, a cathode channel including a cathode gas inlet and a cathode gas outlet, and an electrolyte in communication with the anode and cathode channel for facilitating ion exchange between the anode and cathode channel;
an oxygen gas delivery system coupled to the cathode gas inlet for delivering a gaseous stream comprising oxygen gas to the cathode channel; and
a hydrogen gas delivery system coupled to the anode gas inlet, for delivering a gaseous stream enriched in hydrogen gas to the anode channel, including a first rotary pressure swing adsorption system for enriching hydrogen in a gaseous feed.

27. The electrical current generating system according to claim 26, wherein the first rotary pressure swing adsorption system includes a first feed gas inlet for receiving a first gas feed comprising hydrogen gas and a gas outlet coupled to the anode gas inlet.

28. The current generating system according to claim 27, wherein the hydrogen gas delivery system includes a gas inlet for receiving a second gas feed from the anode gas outlet and a gas outlet for delivering the gaseous stream enriched in hydrogen gas to the anode channel.

29. The electrical current generating system according to claim 28, wherein the second gas feed is passed through the first rotary pressure swing adsorption system.

30. The electrical current generating system according to claim 29, wllerein the first rotary pressure swing adsorption system includes a second feed gas inlet for receiving the second gas feed.

31. The electrical current generating system according to claim 30, wherein the oxygen gas delivery system comprises a second rotary pressure swing adsorption system for extracting oxygen gas from air, the second rotary pressure swing adsorption system including a first feed gas inlet for receiving an air feed and a gas outlet coupled to the cathode gas inlet for supplying a gaseous stream enriched in oxygen gas to the cathode channel.

32. The electrical current generating system according to claim 30, wherein the hydrogen gas delivery system comprises a reactor for producing the first gas feed from hydrocarbon fuel, and wherein the first rotary pressure swing adsorption system is coupled to the reactor and deceives the first and second gas feeds.

33. The electrical current generating system according to claim 31, wherein the hydrogen gas delivery system comprises a reactor for producing a second gas feed from hydrocarbon fuel, and wherein the first rotary pressure swing adsorption system is coupled to the reactor and receives the first and second gas feeds.

34. The electrical current generating system according to claim 33, wherein the first rotary pressure swing adsorption system receives the first and second gas feeds, and produces a gaseous stream enriched in hydrogen therefrom.

35. The electrical current generating system according to claim 34, wherein the first rotary pressure swing adsorption system includes a first feed gas inlet for receiving the first gas feed, and a second feed gas inlet for receiving the second gas feed.

36. The electrical current generating system according to claim 35, wherein the first gas feed is provided at a pressure level different from a pressure level of the second gas feed.

37. The electrical current generating system according to claim 33, wherein the reactor comprises a steam reformer, and a water gas shift reactor coupled to the steam reformer for producing the second gas feed.

38. The electrical current generating system according to claim 37, wherein the steam reformer includes a first burner inlet coupled to the cathode gas outlet for receiving humid oxygen-enriched gas, and a second burner inlet for receiving a hydrocarbon fuel for burning within the burner.

39. The electrical current generating system according to claim 37, wherein the steam reformer includes a burner including a first burner inlet coupled to the cathode gas outlet for receiving humid oxygen-enriched gas, and a second burner inlet for receiving heavy product from the first rotary pressure swing adsorption system for burning within the burner for providing endothermic heat of reaction for steam reforming of the hydrocarbon fuel.

40. The electrical current generating system according to claim 33, wherein the reactor comprises an autothermal reformer, and a water gas shift reactor coupled to the steam reformer for producing the second gas feed.

41. The electrical current generating system according to claim 40, wherein the oxygen gas delivery system comprises a second rotary pressure swing adsorption system for extracting oxygen gas from air, the second rotary pressure swing adsorption system including a first feed gas inlet for receiving an air feed, and a gas outlet coupled to the cathode gas inlet for supplying a gaseous stream enriched in oxygen gas to the cathode channel, and the reactor comprises a burner including a first burner inlet for receiving air, and a second burner inlet for receiving a gaseous stream enriched in hydrogen gas from the first rotary pressure swing adsorption system for burning the received hydrogen gas within the burner for recovery of heat energy for pressurizing the air feed.

42. The electrical current generating system according to claim 41, wherein at least one of the rotary pressure swing adsorption systems comprises a rotary module including a stator and a rotor rotatable relative to the stator, the rotor including a plurality of flow paths for receiving adsorbent material therein for preferentially adsorbing a first gas component in response to increasing pressure in the flow paths relative to a second gas component, and compression machinery coupled to the rotary module for facilitating gas flow through the flow paths for separating the first gas component from the second gas component.

43. The current generating system according to claim 42, wherein the stator includes a first stator valve surface, a second stator valve surface, a plurality of first function compartments opening into the first stator valve surface, and a plurality of second function compartments opening into the second stator valve surface, and the rotor includes a first rotor valve surface in communication with the first stator valve surface, a second rotor valve surface in communication with the second stator valve surface, and a plurality of apertures provided in the rotor valve surfaces and in communication with respective ends of tbe flow paths and the function compartments.

44. The current generating system according to claim 43, wherein the compression machinery is coupled to a portion of the function compartments for maintaining the portion of function compartments at a plurality of discrete respective pressure levels between an upper pressure and a lower pressure for maintaining uniform gas flow through the portion of function compartments.

45. A method for generating an electric potential comprising the steps of:
providing a fuel cell including an anode channel including an anode gas inlet and an anode gas outlet, a cathode gas inlet and a cathode gas outlet, and an electrolyte in communicating with the anode and cathode channel for facilitating ion exchange between the anode and cathode channel; and
supplying a gaseous stream enriched in oxygen gas to the cathode gas inlet, wherein the supplying step comprises the steps of supplying a first gas feed to a rotary pressure swing adsorption apparatus to produce a product gas stream enriched in oxygen gas, and delivering the product gas stream to the cathode gas inlet.

46. The method according to claim 45, wherein the supplying step further comprises the step of recirculating a portion of cathode gas exhausted from the cathode gas outlet to the cathode gas inlet.

47. The method according to claim 46, wherein the recirculating step comprises the step of delivering the exhaust gas portion to the rotary pressure swing adsorption apparatus as a second gas feed.

48. The method according to claim 47, wherein the recirculating step further comprises the step of purging a remainder of the exhausted cathode gas.

49. The method according to claim 48, wherein the recirculating step comprises the step of delivering the exhaust gas portion at increased pressure to the cathode gas inlet.

50. The method according to claim 49, wherein the recirculating step further comprises recovering waste heat from the fuel cell for enhancing recovery of expansion energy from the rotary pressure swing adsorption apparatus.

51. A method for generating an electric potential comprising the steps of:
providing a fuel cell including an anode channel including an anode gas inlet and an anode gas outlet, a cathode gas inlet and a cathode gas outlet, and an electrolyte in communicating with the anode and cathode channel for facilitating ion exchange between the anode and cathode channel;
supplying a first gaseous stream enriched in hydrogen gas to the anode gas inlet, wherein the supplying step comprises the steps of supplying a first gas feed to a rotary hydrogen pressure swing adsorption apparatus to produce a first product gas stream enriched in hydrogen gas, and delivering the first product gas stream to the anode gas inlet; and
supplying a second gaseous stream enriched in oxygen gas to the cathode gas inlet.

52. The method according to claim 51, wherein the step of supplying a first gaseous stream further comprises the step of recirculating a portion of anode gas exhausted from the anode gas outlet to the anode gas inlet.

53. The method according to claim 52, wherein the recirculating step comprises the step of delivering the exhaust gas portion to the rotary hydrogen pressure swing adsorption apparatus as a second gas feed.

54. The method according to claim 53, wherein the step of supplying a second gaseous stream comprises the steps of supplying an air feed to a rotary oxygen pressure swing adsorption apparatus to produce a second product gas stream enriched in oxygen gas, and delivering the second product gas stream to the cathode gas inlet.

55. The method according to claim 54, wherein the step of supplying a first gaseous stream enriched in hydrogen gas comprises the steps of supplying a hydrocarbon fuel to a reformer, supplying oxygen-enriched gas from the cathode gas outlet, and reacting the fuel with oxygen-enriched gas from the cathode gas outlet to produce the first gas feed.

56. The method according to claim 55, wherein the reformer comprises a steam reformer including a combustor, and the reacting step comprises delivering the fuel to the combustor, and providing heat energy to the combustor by burning tail gas extracted from the rotary hydrogen pressure swing adsorption apparatus as heavy product gas with the oxygen-enriched gas from the cathode gas outlet in the combustor

57. The method according to claim 55, wherein the reformer comprises a steam reformer including a combustor, and the reacting step comprises delivering the fuel to the combustor, and providing heat energy to the combustor by burning tail gas extracted from the rotary hydrogen pressure swing adsorption apparatus as heavy product gas with a portion of the air feed in the combustor, and recovering heat of combustion from the combustor for delivering air under pressure to the rotary oxygen pressure swing adsorption apparatus.

## Revendications

1. Système de génération de courant électrique, comprenant :
une pile à combustible comprenant un canal d'anode comportant une entrée de gaz d'anode et une sortie de gaz d'anode, un canal de cathode comportant une entrée de gaz de cathode et une sortie de gaz de cathode, et un électrolyte en communication avec le canal d'anode et le canal de cathode pour faciliter un échange d'ions entre le canal d'anode et le canal de cathode ; et
un système d'alimentation en oxygène gazeux couplé à l'entrée de gaz de cathode pour fournir un courant de gaz enrichi en oxygène gazeux au canal de cathode, le système d'alimentation en oxygène gazeux comprenant un système rotatif d'adsorption modulée en pression pour enrichir en oxygène une arrivée de gaz.

2. Système de génération de courant électrique selon la revendication 1, dans lequel le système rotatif d'adsorption modulée en pression comporte une première entrée de gaz d'alimentation pour recevoir une arrivée d'air comme première arrivée de gaz, et une sortie de gaz couplée à l'entrée de gaz de cathode.

3. Système de génération de courant électrique selon la revendication 2, dans lequel le système d'alimentation en oxygène gazeux comporte une entrée de gaz pour recevoir une première partie de gaz de cathode échappée du canal de cathode, et une sortie de gaz pour fournir au canal de cathode le courant de gaz enrichi en oxygène gazeux.

4. Système de génération de courant électrique selon la revendication 3, dans lequel le système d'alimentation en oxygène gazeux comprend un premier moyen de recirculation de gaz couplé à la sortie de gaz de cathode pour remettre en circulation la première partie de gaz de cathode échappée du canal de cathode vers l'entrée de gaz de cathode.

5. Système de génération de courant électrique selon la revendication 4, dans lequel le premier moyen de recirculation de gaz comprend un compresseur pour transmettre sous pression à l'entrée de gaz de cathode la première partie de gaz d'échappement de cathode.

6. Système de génération de courant électrique selon la revendication 5, dans lequel le premier moyen de recirculation de gaz comprend un séparateur-déshumidificateur couplé entre la sortie de gaz de cathode et le compresseur pour éliminer l'humidité de la première partie de gaz d'échappement de cathode.

7. Système de génération de courant électrique selon la revendication 6, dans lequel le moyen de recirculation de gaz dirige la première partie de gaz d'échappement de cathode comme un deuxième gaz d'alimentation vers une deuxième entrée de gaz d'alimentation du système rotatif à adsorption modulée en pression.

8. Système de génération de courant électrique selon la revendication 7, dans lequel le système rotatif d'adsorption modulée en pression comprend un module rotatif comprenant un stator et un rotor pouvant tourner par rapport au stator, le rotor comprenant une pluralité de chemins d'écoulement pour recevoir une matière adsorbante dans ceux-ci afin d'adsorber de préférence un premier composant de gaz en réaction à une augmentation de la pression dans les chemins d'écoulement par rapport à un deuxième composant de gaz, et une machinerie de compression couplée au module rotatif pour faciliter l'écoulement de gaz à travers les chemins d'écoulement afin de séparer le premier composant de gaz du deuxième composant de gaz.

9. Système de génération de courant électrique selon la revendication 8, dans lequel le stator comprend une première surface de soupape de stator, une deuxième surface de soupape de stator, une pluralité de premiers compartiments de fonction s'ouvrant dans la première surface de soupape de stator, et une pluralité de deuxièmes compartiments de fonction s'ouvrant dans la deuxième surface de soupape de stator, et le rotor comprend une première surface de soupape de rotor en communication avec la première surface de soupape de stator, une deuxième surface de soupape de rotor en communication avec la deuxième surface de soupape de stator, et une pluralité d'ouvertures prévues dans les surfaces de soupape de rotor et en communication avec des extrémités respectives des chemins d'écoulement et des compartiments de fonction.

10. Système de génération de courant électrique selon la revendication 9, dans lequel la machinerie de compression est couplée à une partie des compartiments de fonction pour maintenir la partie des compartiments de fonction à une pluralité de niveaux de pression respectifs discrets entre une pression supérieure et une pression inférieure afin de maintenir un écoulement de gaz uniforme à travers la partie des compartiments de fonction.

11. Système de génération de courant électrique selon la revendication 9, dans lequel les compartiments de fonction comprennent un compartiment de sortie de reflux de lumière et un compartiment de retour de reflux de lumière, la machinerie de compression comprend un dilatateur de reflux de lumière couplé entre la sortie de reflux de lumière et des compartiments de retour, et le premier moyen de recirculation de gaz comprend un compresseur couplé au dilatateur de reflux de lumière pour transmettre sous pression à l'entrée de gaz de cathode la première partie de gaz d'échappement de cathode.

12. Système de génération de courant électrique selon la revendication 11, dans lequel le système rotatif d'adsorption modulée en pression comprend un radiateur disposé entre le compartiment de sortie de reflux de lumière et le dilatateur de reflux de lumière pour accroître la récupération d'énergie à partir du gaz de reflux de lumière échappé du compartiment de sortie de reflux de lumière.

13. Système de génération de courant électrique selon la revendication 11, dans lequel les compartiments de fonction comprennent un compartiment d'alimentation en gaz et un compartiment de refoulement à contre-courant, et la machinerie de compression comprend un compresseur couplé à la première entrée de gaz d'alimentation pour fournir de l'air comprimé au compartiment d'alimentation en gaz, et un dilatateur couplé au compresseur pour permettre l'échappement d'un gaz de produit lourd enrichi avec le premier composant de gaz provenant du compartiment de refoulement à contre-courant.

14. Système de génération de courant électrique selon la revendication 11, dans lequel les compartiments de fonction comprennent un compartiment de refoulement à contre-courant et un compartiment de produit lourd, et la machinerie de compression comprend un dilatateur couplé au compartiment de refoulement à contre-courant, et une pompe à vide couplée au dilatateur pour extraire hors du compartiment de produit lourd un gaz de produit lourd enrichi avec le premier composant de gaz à une pression sub-atmosphérique.

15. Système de génération de courant électrique selon la revendication 9, dans lequel les compartiments de fonction comprennent un compartiment d'alimentation en gaz, et le moyen de recirculation de gaz dirige comme gaz d'alimentation vers le compartiment d'alimentation en gaz la première partie de gaz d'échappement de cathode.

16. Système de génération de courant électrique selon la revendication 9, dans lequel les compartiments de fonction comprennent un compartiment d'alimentation en gaz, et le système de génération de courant comprend un deuxième moyen de recirculation de gaz couplé à la sortie de gaz de cathode pour remettre en circulation vers le compartiment d'alimentation en gaz une deuxième partie du gaz d'échappement de cathode.

17. Système de génération de courant électrique selon la revendication 16, dans lequel le deuxième moyen de recirculation de gaz comprend un orifice d'étranglement.

18. Système de génération de courant électrique selon la revendication 8, dans lequel la matière adsorbante est comprise dans le groupe comprenant le Ca-X, le Li-X, la zéolithe chabasite de lithium, la chabasite à échange de calcium et la chabasite à échange de strontium.

19. Système de génération de courant électrique selon la revendication 1, dans lequel le système rotatif d'adsorption modulée en pression enrichit en oxygène et élimine le dioxyde de carbone d'une arrivée d'air.

20. Système de génération de courant électrique selon la revendication 19, comprenant en outre un système d'alimentation en hydrogène gazeux couplé à l'entrée de gaz d'anode.

21. Système de génération de courant électrique selon la revendication 20, dans lequel le système d'alimentation en hydrogène gazeux enrichit en hydrogène un courant de gaz.

22. Système de génération de courant électrique selon la revendication 21, comprenant en outre un accumulateur d'oxygène interposé entre le système d'alimentation en oxygène gazeux et l'entrée de gaz de cathode.

23. Système de génération de courant électrique selon la revendication 22, dans lequel l'électrolyte est alcalin et est maintenu à une température de travail supérieure à environ 100°C, le système d'alimentation en oxygène gazeux est actionné pour fournir de l'oxygène présentant une pureté d'environ 90 % à l'entrée de gaz de cathode, de telle sorte que l'eau produite de la pile à combustible soit fournie sous la forme de vapeur sèche concentrée à partir de la sortie de gaz de cathode ; le système comprenant un dilatateur de vapeur pour dilater la vapeur passant de la sortie de gaz de cathode à un condenseur sous vide, une pompe à condensat pour évacuer le liquide hors du condenseur, et une pompe à vide coopérant avec le système rotatif d'adsorption d'oxygène modulée en pression et évacuant les excès de gaz permanents hors du condenseur sous vide.

24. Système de génération de courant électrique selon là revendication 7, dans lequel le système rotatif d'adsorption modulée en pression comprend un module rotatif pour mettre en oeuvre un procédé d'adsorption modulée en pression présentant une pression de fonctionnement parcourant un cycle entre une pression supérieure et une pression inférieure pour extraire une première fraction de gaz et une deuxième fraction de gaz d'un mélange de gaz comprenant les première et deuxième fractions de gaz, le module rotatif comprenant :
un stator comprenant une première surface de soupape de stator, une deuxième surface de soupape de stator, une pluralité de premiers compartiments de fonction s'ouvrant dans la première surface de soupape de stator, et une pluralité de deuxièmes compartiments de fonction s'ouvrant dans la deuxième surface de soupape de stator ; et
un rotor couplé d'une façon rotative au stator et comprenant une première surface de soupape de rotor en communication avec la première surface de soupape de stator, une deuxième surface de soupape de rotor en communication avec la deuxième surface de soupape de stator, une pluralité de chemins d'écoulement pour recevoir une matière adsorbante dans ceux-ci, chacun desdits chemins d'écoulement possédant une paire d'extrémités opposées, et une pluralité d'ouvertures prévues dans les surfaces de soupape de rotor et en communication avec les extrémités des chemins d'écoulement et les ports de fonction pour exposer d'une façon cyclique chacun desdits chemins d'écoulement à une pluralité de niveaux de pression discrets entre les pressions supérieure et inférieure pour maintenir un écoulement de gaz uniforme à travers les premiers et deuxièmes compartiments de fonction ;
dans lequel les compartiments de fonction comprennent des premiers et deuxièmes compartiments d'alimentation en gaz s'ouvrant dans la première surface de soupape de stator pour fournir le mélange de gaz aux chemins d'écoulement et pour exposer séquentiellement les chemins d'écoulement au deuxième gaz d'alimentation avant le premier gaz d'alimentation.

25. Système de génération de courant électrique selon la revendication 24, dans lequel le deuxième gaz d'alimentation est enrichi en oxygène par rapport au premier gaz d'alimentation.

26. Système de génération de courant électrique, comprenant :
une pile à combustible comprenant un canal d'anode comportant une entrée de gaz d'anode et une sortie de gaz d'anode, un canal de cathode comportant une entrée de gaz de cathode et une sortie de gaz de cathode, et un électrolyte en communication avec le canal d'anode et le canal de cathode pour faciliter un échange d'ions entre le canal d'anode et le canal de cathode ;
un système d'alimentation en oxygène gazeux couplé à l'entrée de gaz de cathode pour fournir un courant de gaz contenant de l'oxygène gazeux au canal de cathode ; et
un système d'alimentation en hydrogène gazeux couplé à l'entrée de gaz d'anode pour fournir un courant de gaz enrichi en hydrogène gazeux au canal d'anode, comprenant un premier système rotatif d'adsorption modulée en pression pour enrichir en hydrogène une arrivée de gaz.

27. Système de génération de courant électrique selon la revendication 26, dans lequel le premier système rotatif d'adsorption modulée en pression comprend une première entrée de gaz d'alimentation pour recevoir une première arrivée de gaz comprenant de l'hydrogène gazeux, et une sortie de gaz couplée à l'entrée de gaz d'anode.

28. Système de génération de courant électrique selon la revendication 27, dans lequel le système d'alimentation en hydrogène gazeux comprend une entrée de gaz pour recevoir une deuxième arrivée de gaz à partir de la sortie de gaz d'anode, et une sortie de gaz pour fournir au canal d'anode le courant de gaz enrichi en hydrogène gazeux.

29. Système de génération de courant électrique selon la revendication 28, dans lequel la deuxième arrivée de gaz est passée à travers le premier système rotatif d'adsorption modulée en pression.

30. Système de génération de courant électrique selon la revendication 29, dans lequel le premier système rotatif d'adsorption modulée en pression comprend une deuxième entrée de gaz d'alimentation pour recevoir la deuxième arrivée de gaz.

31. Système de génération de courant électrique selon la revendication 30, dans lequel le système d'alimentation en oxygène gazeux comprend un deuxième système rotatif d'adsorption modulée en pression pour extraire l'oxygène gazeux de l'air, le deuxième système rotatif d'adsorption modulée en pression comportant une première entrée de gaz d'alimentation pour recevoir une arrivée d'air, et une sortie de gaz couplée à l'entrée de gaz de cathode pour fournir au canal de cathode un courant de gaz enrichi en oxygène gazeux.

32. Système de génération de courant électrique selon la revendication 30, dans lequel le système d'alimentation en hydrogène gazeux comprend un réacteur pour produire la première arrivée de gaz à partir d'un combustible hydrocarbure, et dans lequel le premier système rotatif d'adsorption modulée en pression est couplé au réacteur et reçoit les première et deuxième arrivées de gaz.

33. Système de génération de courant électrique selon la revendication 31, dans lequel le système d'alimentation en hydrogène gazeux comprend un réacteur pour produire une deuxième arrivée de gaz à partir d'un combustible hydrocarbure, et dans lequel le premier système rotatif d'adsorption modulée en pression est couplé au réacteur et reçoit les première et deuxième arrivées de gaz.

34. Système de génération de courant électrique selon la revendication 33, dans lequel le premier système rotatif d'adsorption modulée en pression reçoit les première et deuxième arrivées de gaz, et produit un courant de gaz enrichi en hydrogène à partir de celles-ci.

35. Système de génération de courant électrique selon la revendication 34, dans lequel le premier système rotatif d'adsorption modulée en pression comporte une première entrée de gaz d'alimentation pour recevoir la première arrivée de gaz, et une deuxième entrée de gaz d'alimentation pour recevoir la deuxième arrivée de gaz.

36. Système de génération de courant électrique selon la revendication 35, dans lequel la première arrivée de gaz est fournie à un niveau de pression différent d'un niveau de pression de la deuxième arrivée de gaz.

37. Système de génération de courant électrique selon la revendication 33, dans lequel le réacteur comprend un reformeur à la vapeur, et un réacteur suractivé au gaz à l'eau couplé au reformeur à la vapeur pour produire la deuxième arrivée de gaz.

38. Système de génération de courant électrique selon la revendication 37, dans lequel le reformeur à la vapeur comporte une première entrée de brûleur couplée à la sortie de gaz de cathode pour recevoir un gaz humide enrichi en oxygène, et une deuxième entrée de brûleur pour recevoir un combustible hydrocarbure à brûler à l'intérieur du brûleur.

39. Système de génération de courant électrique selon la revendication 37, dans lequel le reformeur à la vapeur comprend un brûleur comportant une première entrée de brûleur couplée à la sortie de gaz de cathode pour recevoir un gaz humide enrichi en oxygène, et une deuxième entrée de brûleur pour recevoir un produit lourd provenant du premier système rotatif d'adsorption modulée en pression à brûler à l'intérieur du brûleur pour générer une chaleur de réaction endothermique pour reformer à la vapeur le combustible hydrocarbure.

40. Système de génération de courant électrique selon la revendication 33, dans lequel le réacteur comprend un reformeur autotherme, et un réacteur suractivé au gaz à l'eau couplé au reformeur à la vapeur pour produire la deuxième arrivée de gaz.

41. Système de génération de courant électrique selon la revendication 40, dans lequel le système d'alimentation en oxygène gazeux comprend un deuxième système rotatif d'adsorption modulée en pression pour extraire l'oxygène gazeux de l'air, le deuxième système rotatif d'adsorption modulée en pression comportant une première entrée de gaz d'alimentation pour recevoir une arrivée d'air, et une sortie de gaz couplée à l'entrée de gaz de cathode pour fournir au canal de cathode un courant de gaz enrichi en oxygène gazeux, et le réacteur comprend un brûleur comportant une première entrée de brûleur pour recevoir de l'air, et une deuxième entrée de brûleur pour recevoir un courant de gaz enrichi en hydrogène gazeux provenant du premier système rotatif d'adsorption modulée en pression pour brûler l'hydrogène gazeux reçu à l'intérieur du brûleur pour récupérer l'énergie thermique pour pressuriser l'arrivée d'air.

42. Système de génération de courant électrique selon la revendication 41, dans lequel au moins un des systèmes rotatifs d'adsorption modulée en pression comprend un module rotatif comprenant un stator et un rotor pouvant tourner par rapport au stator, le rotor comprenant une pluralité de chemins d'écoulement pour recevoir une matière adsorbante dans ceux-ci afin d'adsorber de préférence un premier composant de gaz en réaction à une augmentation de la pression dans les chemins d'écoulement par rapport à un deuxième composant de gaz, et une machinerie de compression couplée au module rotatif pour faciliter l'écoulement de gaz à travers les chemins d'écoulement afin de séparer le premier composant de gaz du deuxième composant de gaz.

43. Système de génération de courant électrique selon la revendication 42, dans lequel le stator comprend une première surface de soupape de stator, une deuxième surface de soupape de stator, une pluralité de premiers compartiments de fonction s'ouvrant dans la première surface de soupape de stator, et une pluralité de deuxièmes compartiments de fonction s'ouvrant dans la deuxième surface de soupape de stator, et le rotor comprend une première surface de soupape de rotor en communication avec la première surface de soupape de stator, une deuxième surface de soupape de rotor en communication avec la deuxième surface de soupape de stator, et une pluralité d'ouvertures prévues dans les surfaces de soupape de rotor et en communication avec des extrémités respectives des chemins d'écoulement et des compartiments de fonction.

44. Système de génération de courant électrique selon la revendication 43, dans lequel la machinerie de compression est couplée à une partie des compartiments de fonction pour maintenir la partie des compartiments de fonction à une pluralité de niveaux de pression respectifs discrets entre une pression supérieure et une pression inférieure afin de maintenir un écoulement de gaz uniforme à travers la partie des compartiments de fonction.

45. Procédé pour générer un potentiel électrique, comprenant les étapes consistant à :
disposer une pile à combustible comprenant un canal d'anode comportant une entrée de gaz d'anode et une sortie de gaz d'anode, un canal de cathode comportant une entrée de gaz de cathode et une sortie de gaz de cathode, et un électrolyte en communication avec le canal d'anode et le canal de cathode pour faciliter un échange d'ions entre le canal d'anode et le canal de cathode ; et
fournir un courant de gaz enrichi en oxygène gazeux à l'entrée de gaz de cathode, dans lequel l'étape de fourniture comprend les étapes de fourniture d'une première arrivée de gaz à un dispositif rotatif d'adsorption modulée en pression pour produire un courant de gaz produit enrichi en oxygène gazeux, et de fourniture du courant de gaz produit à l'entrée de gaz de cathode.

46. Procédé selon la revendication 45, dans lequel l'étape de fourniture comprend en outre l'étape de recirculation d'une partie du gaz de cathode échappée de la sortie de gaz de cathode vers l'entrée de gaz de cathode.

47. Procédé selon la revendication 46, dans lequel l'étape de recirculation comprend l'étape de fourniture comme deuxième arrivée de gaz de la partie de gaz d'échappement au dispositif rotatif d'adsorption modulée en pression.

48. Procédé selon la revendication 47, dans lequel l'étape de recirculation comprend en outre l'étape de purge du restant du gaz de cathode échappé.

49. Procédé selon la revendication 48, dans lequel l'étape de recirculation comprend l'étape de fourniture à l'entrée de gaz de cathode de la partie de gaz d'échappement à une pression accrue.

50. Procédé selon la revendication 49, dans lequel l'étape de recirculation comprend en outre la récupération de la chaleur perdue par la pile à combustible pour accroître la récupération d'énergie de dilatation auprès du dispositif rotatif d'adsorption modulée en pression.

51. Procédé pour générer un potentiel électrique, comprenant les étapes consistant à :
disposer une pile à combustible comprenant un canal d'anode comportant une entrée de gaz d'anode et une sortie de gaz d'anode, un canal de cathode comportant une entrée de gaz de cathode et une sortie de gaz de cathode, et un électrolyte en communication avec le canal d'anode et le canal de cathode pour faciliter un échange d'ions entre le canal d'anode et le canal de cathode ;
fournir un premier courant de gaz enrichi en hydrogène gazeux à l'entrée de gaz d'anode, dans lequel l'étape de fourniture comprend les étapes de fourniture d'une première arrivée de gaz à un dispositif rotatif d'adsorption d'hydrogène modulée en pression pour produire un premier courant de gaz produit enrichi en hydrogène gazeux, et de fourniture du courant de gaz produit à l'entrée de gaz d'anode ; et
fournir un deuxième courant de gaz enrichi en oxygène gazeux à l'entrée de gaz de cathode.

52. Procédé selon la revendication 51, dans lequel l'étape de fourniture d'un premier courant de gaz comprend en outre l'étape de recirculation d'une partie du gaz d'anode échappée de la sortie de gaz d'anode vers l'entrée de gaz d'anode.

53. Procédé selon la revendication 52, dans lequel l'étape de recirculation comprend l'étape de fourniture comme deuxième arrivée de gaz de la partie de gaz d'échappement au dispositif rotatif d'adsorption d'hydrogène modulée en pression.

54. Procédé selon la revendication 53, dans lequel l'étape de fourniture d'un deuxième courant de gaz comprend les étapes de fourniture d'une arrivée d'air à un dispositif rotatif d'adsorption d'oxygène modulée en pression pour produire un deuxième courant de gaz produit enrichi en oxygène gazeux, et de fourniture du deuxième courant de gaz produit à l'entrée de gaz de cathode.

55. Procédé selon la revendication 54, dans lequel l'étape de fourniture d'un premier courant de gaz enrichi en hydrogène gazeux comprend les étapes consistant à fournir un combustible hydrocarbure à un reformeur, à fournir du gaz enrichi en oxygène provenant de la sortie de gaz de cathode et à faire réagir le combustible avec le gaz enrichi en oxygène provenant de la sortie de gaz de cathode pour produire la première arrivée de gaz.

56. Procédé selon la revendication 55, dans lequel le reformeur comprend un reformeur à la vapeur comprenant un brûleur, et l'étape de réaction comprend la fourniture du combustible au brûleur, et la fourniture d'une énergie thermique au brûleur en brûlant le gaz résiduaire extrait du dispositif rotatif d'adsorption d'hydrogène modulée en pression comme gaz de produit lourd avec le gaz enrichi en oxygène provenant de la sortie de gaz de cathode dans le brûleur.

57. Procédé selon la revendication 55, dans lequel le reformeur comprend un reformeur à la vapeur comprenant un brûleur, et l'étape de réaction comprend la fourniture du combustible au brûleur, et la fourniture d'une énergie thermique au brûleur en brûlant le gaz résiduaire extrait du dispositif rotatif d'adsorption d'hydrogène modulée en pression comme gaz de produit lourd avec une partie de l'arrivée d'air dans le brûleur, et la récupération de la chaleur de la combustion provenant du brûleur pour fournir de l'air sous pression au dispositif rotatif d'adsorption d'oxygène modulée en pression.

## Patentansprüche

1. Stromerzeugungssystem, das Folgendes umfasst:
eine Brennstoffzelle mit einem Anodenkanal, der einen Andodengaseinlass und einen Anodengasauslass enthält, einem Kathodenkanal, der einen Kathodengaseinlass und einen Kathodengasauslass enthält, und einem Elektrolyten, der mit dem Anoden- und dem Kathodenkanal in Verbindung steht, um einen Ionenaustausch zwischen dem Anoden- und dem Kathodenkanal zu erleichtern; und
ein Sauerstoffgaszuführungssystem, das mit dem Kathodengaseinlass verbunden ist, um dem Kathodenkanal einen mit Sauerstoffgas angereicherten Gasstrom zuzuführen, wobei das Sauerstoffgaszuführungssystem ein Rotationsdruckwechseladsorptionssystem zur Sauerstoffanreichung in einer Gaszufuhr enthält.

2. Stromerzeugungssystem nach Anspruch 1, bei dem das Druckwechseladsorptionssystem einen ersten Einsatzgaseinlass zur Aufnahme von Luftzufuhr als eine erste Gaszufuhr und einen mit dem Kathodengasauslass verbundenen Gasauslass enthält.

3. Stromerzeugungssystem nach Anspruch 2, bei dem das Sauerstoffgaszuführungssystem einen Gaseinlass zur Aufnahme eines ersten Teils von von dem Kathodenkanal abgegebenem Kathodengas und einen Gasauslass zur Zuführung des mit Sauerstoffgas angereicherten Gasstroms zum Kathodenkanal enthält.

4. Stromerzeugungssystem nach Anspruch 3, bei dem das Sauerstoffgaszuführungssystem ein erstes Gasrückführungsmittel enthält, das mit dem Kathodengasauslass zur Rückführung des ersten Teils des aus dem Kathodenkanal abgegebenen Kathodengases zum Kathodengaseinlass verbunden ist.

5. Stromerzeugungssystem nach Anspruch 4, bei dem das erste Gasrückführungsmittel einen Verdichter zur Zuführung des ersten Kathodenabgasteils unter Druck zum Kathodengaseinlass umfasst.

6. Stromerzeugungssystem nach Anspruch 5, bei dem das erste Gasrückführungsmittel einen Kondensatabscheider enthält, der den Kathodengasauslass und den Verdichter miteinander verbindet, um dem ersten Kathodenabgasteil Feuchtigkeit zu entziehen.

7. Stromerzeugungssystem nach Anspruch 6, bei dem das Gasrückführungsmittel den ersten Kathodenabgasteil als ein zweites Einsatzgas zu einem zweiten Einsatzgaseinlass des Rotationsdruckwechseladsorptionssystems leitet.

8. Stromerzeugungssystem nach Anspruch 7, bei dem das Rotationsdruckwechseladsorptionssystem ein Rotationsmodul, das einen Stator und einen bezüglich des Stators drehbaren Rotor enthält, wobei der Rotor mehrere Strömungswege zur Aufnahme von Adsorptionsmaterial darin enthält, um vorzugsweise eine erste Gaskomponente als Reaktion auf zunehmenden Druck in den Strömungswegen bezüglich einer zweiten Gaskomponente aufzunehmen, und eine mit dem Rotationsmodul verbundene Verdichtungsmaschinenanlage, um Gasstrom durch die Strömungswege zum Trennen der ersten Gaskomponente von der zweiten Gaskomponente zu erleichtern, umfasst.

9. Stromerzeugungssystem nach Anspruch 8, bei dem der Stator eine erste Statorventilfläche, eine zweite Statorventilfläche, mehrere erste Funktionskammern, die in die erste Statorventilfläche münden, und mehrere zweite Funktionskammern, die in die zweite Statorventilfläche münden, enthält und der Rotor eine erste Rotorventilfläche, die mit der ersten Statorventilfläche verbunden ist, eine zweite Rotorventilfläche, die mit der zweiten Statorventilfläche verbunden ist, und mehrere in den Rotorventilflächen ausgebildete Öffnungen enthält, die mit jeweiligen Enden der Strömungswege und den Funktionskammern in Verbindung stehen.

10. Stromerzeugungssystem nach Anspruch 9, bei dem die Verdichtungsmaschinenanlage mit einem Teil der Funktionskammern verbunden ist, um den Teil der Funktionskammern auf mehreren verschiedenen jeweiligen Druckpegeln zwischen einem oberen Druck und einem unteren Druck zu halten und so einen gleichförmigen Gasstrom durch den Teil der Funktionskammern aufrechtzuerhalten.

11. Stromerzeugungssystem nach Anspruch 9, bei dem die Funktionskammern eine Leichtrückflussproduktauslasskammer und eine Leichtrückflussproduktrückführkammer enthalten, die Verdichtungsmaschinenanlage einen zwischen der Leichtrückflussproduktauslass- und der Leichtrückflussproduktrückführkammer verbundenen Leichtrückflussproduktentspanner umfasst; und das erste Gasrückführungsmittel einen Verdichter umfasst, der mit dem Leichtrückflussproduktentspanner verbunden ist, um dem Kathodengaseinlass den ersten Kathodenabgasteil unter Druck zuzuführen.

12. Stromerzeugungssystem nach Anspruch 11, bei dem das Rotationsdruckwechseladsorptionssystem eine Heizvorrichtung enthält, die zwischen der Leichtrückflussproduktauslasskammer und dem Leichtrückflussproduktentspanner angeordnet ist, um die Rückgewinnung von Energie aus dem aus der Leichtrückflussproduktauslasskammer abgegebenen Leichtrückflussgas zu verbessern.

13. Stromerzeugungssystem nach Anspruch 11, bei dem die Funktionskammern eine Gaszufuhrkammer und eine Gegenstrom-Blowdownkammer enthalten und die Verdichtungsmaschinenanlage einen Verdichter, der mit dem ersten Einsatzgaseinlass zur Zuführung von verdichteter Luft zur Gaszufuhrkammer verbunden ist, und einen mit dem Verdichter verbundenen Entspanner zum Abgeben eines mit der ersten Gaskomponente angereicherten schweren Produktgases aus der Gegenstrom-Blowdownkammer umfasst.

14. Stromerzeugungssystem nach Anspruch 11, bei dem die Funktionskammern eine Gegenstrom-Blowdownkammer und eine Schwerproduktkammer enthalten und die Verdichtungsmaschinenanlage einen Entspanner, der mit der Gegenstrom-Blowdownkammer verbunden ist, und eine Vakuumpumpe umfasst, die mit dem Entspanner verbunden ist, um mit der ersten Gaskomponente angereichertes schweres Produktgas bei Unterdruck aus der Schwerproduktkammer abzuziehen.

15. Stromerzeugungssystem nach Anspruch 9, bei dem die Funktionskammern eine Gaszufuhrkammer enthalten und das Gasrückführungsmittel den ersten Kathodenabgasteil als Einsatzgas zur Gaszufuhrkammer leitet.

16. Stromerzeugungssystem nach Anspruch 9, bei dem die Funktionskammern eine Gaszufuhrkammer enthalten und das Stromerzeugungssystem ein zweites Gasrückführungsmittel enthält, das mit dem Kathodengasauslass verbunden ist, um einen zweiten Teil des Kathodenabgases zur Gaszufuhrkammer zurückzuführen.

17. Stromerzeugungssystem nach Anspruch 16, bei dem das zweite Gasrückführungsmittel eine Drosselöffnung umfasst.

18. Stromerzeugungssystem nach Anspruch 8, bei dem das Adsorptionsmaterial Ca-X, Li-X, Lithiumchabazitzeolith, calciumausgetauschtes Chabazit oder strontiumausgetauschtes Chabazit ist.

19. Stromerzeugungssystem nach Anspruch 1, bei dem das Rotationsdruckwechseladsorptionssystem eine Luftzufuhr mit Sauerstoff anreichert und Kohlendioxid daraus entfernt.

20. Stromerzeugungssystem nach Anspruch 19, das weiterhin ein mit dem Anodengaseinlass verbundenes Wasserstoffgaszuführungssystem umfasst.

21. Stromerzeugungssystem nach Anspruch 20, bei dem das Wasserstoffgaszuführungssystem eine Gaszufuhr mit Wasserstoff anreichert.

22. Stromerzeugungssystem nach Anspruch 21, das weiterhin einen Sauerstoffakkumulator enthält, der zwischen dem Sauerstoffgaszuführungssystem und dem Kathodengaseinlass angeordnet ist.

23. Stromerzeugungssystem nach Anspruch 22, bei dem das Elektrolyt alkalisch ist und auf einer Arbeitstemperatur von über 100°C gehalten wird, wobei das Sauerstoffgaszuführungssystem dahingehend betrieben wird, dem Kathodengaseinlass Sauerstoff mit einer Reinheit von ca. 90% zuzuführen, so dass das Produktwasser der Brennstoffzelle als konzentrierter Trockenstrom aus dem Kathodengasauslass abgegeben wird; wobei das System einen Dampfentspanner, um den Dampf aus dem Kathodengasauslass zu einem Vakuumkondensator zu entspannen, eine Kondensatpumpe zum Abführen von Flüssigkeit aus dem Kondensator und eine mit dem Sauerstoffdruckwechseladsorptionssystem zusammenwirkende und Permanentgaskopfprodukte aus dem Vakuumkondensator abführende Vakuumpumpe enthält.

24. Stromerzeugungssystem nach Anspruch 7, bei dem das Rotationsdruckwechseladsorptionssystem ein Rotationsmodul zur Durchführung eines Druckwechseladsorptionsprozesses mit einem zyklisch zwischen einem oberen Druck und einem unteren Druck schwankenden Betriebsdruck umfasst, um eine erste Gasfraktion und eine zweite Gasfraktion aus einem die erste und die zweite Fraktion enthaltenden Gasgemisch abzuziehen, wobei das Rotationsmodul folgendes umfasst:
einen eine erste Statorventilfläche, eine zweite Statorventilfläche, mehrere erste Funktionskammern, die in die erste Statorventilfläche münden, und mehrere zweite Funktionskammern, die in die zweite Statorventilfläche münden, enthaltenden Stator; und
einen drehbar mit dem Stator verbundenen Rotor, der eine mit der ersten Statorventilfläche in Verbindung stehende erste Rotorventilfläche, eine mit der zweiten Statorventilfläche in Verbindung stehende zweite Rotorventilfläche, mehrere Strömungswege zur Aufnahme von Adsorptionsmaterial darin, wobei jeder Strömungsweg ein Paar einander gegenüberliegender Enden enthält, und mehrere in den Rotorventilflächen ausgebildete Öffnungen, die mit dem Strömungswegenden und den Funktionsöffnungen in Verbindung stehen, um jeden Strömungsweg zyklisch mehreren verschiedenen Druckpegeln zwischen dem oberen und unteren Druck auszusetzen und so einen gleichförmigen Gasstrom durch die erste und die zweite Funktionskammer aufrechtzuerhalten, enthält;
wobei die Funktionskammern eine erste und eine zweite Gaszufuhrkammer umfassen, die in die erste Statorventilfläche münden, um den Strömungswegen das Gasgemisch zuzuführen und die Strömungswege nacheinander dem zweiten Einsatzgas vor dem ersten Einsatzgas auszusetzen.

25. Stromerzeugungssystem nach Anspruch 24, bei dem das zweite Einsatzgas bezüglich des ersten Einsatzgases mit Sauerstoff angereichert ist.

26. Stromerzeugungssystem, das Folgendes umfasst:
eine Brennstoffzelle mit einem Anodenkanal, der einen Andodengaseinlass und einen Anodengasauslass enthält, einem Kathodenkanal, der einen Kathodengaseinlass und einen Kathodengasauslass enthält, und einem Elektrolyten, der mit dem Anoden- und dem Kathodenkanal in Verbindung steht, um einen Ionenaustausch zwischen dem Anoden- und dem Kathodenkanal zu erleichtern;
ein Sauerstoffgaszuführungssystem, das mit dem Kathodengaseinlass verbunden ist, um dem Kathodenkanal einen Sauerstoffgas umfassenden Gasstrom zuzuführen; und
ein mit dem Anodengaseinlass verbundenes Wasserstoffgaszuführungssystem zur Zuführung eines mit Wasserstoffgas angereicherten Gasstroms zum Anodenkanal, das ein erstes Rotationsdruckwechseladsorptionssystem zur Wasserstoffanreicherung in einer Gaszufuhr enthält.

27. Stromerzeugungssystem nach Anspruch 26, bei dem das Druckwechseladsorptionssystem einen ersten Einsatzgaseinlass zur Aufnahme einer Wasserstoffgas enthaltenden ersten Gaszufuhr und einen mit dem Anodengaseinlass verbundenen Gasauslass enthält.

28. Stromerzeugungssystem nach Anspruch 27, bei dem das Wasserstoffgaszuführungssystem einen Gaseinlass zur Aufnahme einer zweiten Gaszufuhr von dem Anodengasauslass und einen Gasauslass zur Zuführung eines mit Wasserstoffgas angereicherten Gasstroms zum Anodenkanal enthält.

29. Stromerzeugungssystem nach Anspruch 28, bei dem die zweite Gaszufuhr durch das Rotationsdruckwechseladsorptionssystem geführt wird.

30. Stromerzeugungssystem nach Anspruch 29, bei dem das erste Rotationsdruckwechseladsorptionssystem einen zweiten Einsatzgaseinlass zur Aufnahme der zweiten Gaszufuhr enthält.

31. Stromerzeugungssystem nach Anspruch 30, bei dem das Sauerstoffgaszuführungssystem ein zweites Rotationsdruckwechseladsorptionssystem zum Abziehen von Sauerstoffgas aus Luft umfasst, wobei das zweite Rotationsdruckwechseladsorptionssystem einen ersten Einsatzgaseinlass zur Aufnahme einer Luftzufuhr und einen mit dem Kathodengaseinlass verbundenen Gasauslass zur Zuführung eines mit Sauerstoffgas angereicherten Gasstroms zum Kathodenkanal enthält.

32. Stromerzeugungssystem nach Anspruch 30, bei dem das Wasserstoffgaszuführungssystem einen Reaktor zur Erzeugung der ersten Gaszufuhr aus Kohlenwasserstoffbrennstoff umfasst, und bei dem das erste Rotationsdruckwechseladsorptionssystem mit dem Reaktor verbunden ist und die erste und die zweite Gaszufuhr aufnimmt.

33. Stromerzeugungssystem nach Anspruch 31, bei dem das Wasserstoffgaszuführungssystem einen Reaktor zur Erzeugung einer zweiten Gaszufuhr aus Kohlenwasserstoffbrennstoff umfasst, und bei dem das erste Rotationsdruckwechseladsorptionssystem mit dem Reaktor verbunden ist und die erste und die zweite Gaszufuhr aufnimmt.

34. Stromerzeugungssystem nach Anspruch 33, bei dem das erste Rotationsdruckwechseladsorptionssystem die erste und die zweite Gaszufuhr aufnimmt und einen mit Wasserstoff angereicherten Gasstrom daraus erzeugt.

35. Stromerzeugungssystem nach Anspruch 34, bei dem das erste Rotationsdruckwechseladsorptionssystem einen ersten Einsatzgaseinlass zur Aufnahme der ersten Gaszufuhr und einen zweiten Einsatzgaseinlass zur Aufnahme der zweiten Gaszufuhr enthält.

36. Stromerzeugungssystem nach Anspruch 35, bei dem die erste Gaszufuhr mit einem Druckpegel bereitgestellt wird, der sich von dem Druckpegel der zweiten Gaszufuhr unterscheidet.

37. Stromerzeugungssystem nach Anspruch 33, bei dem der Reaktor einen Dampfreformer und einen mit dem Dampfreformer verbundenen Wassergas-Shiftreaktor zur Erzeugung der zweiten Gaszufuhr umfasst.

38. Stromerzeugungssystem nach Anspruch 37, bei dem der Dampfreformer einen mit dem Kathodengasauslass verbundenen ersten Brennereinlass zur Aufnahme von feuchtem mit Sauerstoff angereichertem Gas und einen zweiten Brennereinlass zur Aufnahme eines Kohlenwasserstoffbrennstoffs zum Verbrennen im Brenner enthält.

39. Stromerzeugungssystem nach Anspruch 37, bei dem der Dampfreformer einen Brenner enthält, der einen mit dem Kathodengasauslass verbundenen ersten Brennereinlass zur Aufnahme von feuchtem mit Sauerstoff angereichertem Gas und einen zweiten Brennereinlass zur Aufnahme von schwerem Produkt aus dem ersten Rotationsdruckwechseladsorptionssystem zum Verbrennen im Brenner zwecks Bereitstellung von endothermer Reaktionswärme zur Dampfreformierung des Kohlenwasserstoffbrennstoffs enthält.

40. Stromerzeugungssystem nach Anspruch 33, bei dem der Reaktor einen autothermen Reformer und einen mit dem Dampfreformer verbundenen Wassergas-Shiftreaktor zur Erzeugung der zweiten Gaszufuhr enthält.

41. Stromerzeugungssystem nach Anspruch 40, bei dem das Sauerstoffgaszuführungssystem ein zweites Rotationsdruckwechseladsorptionssystem zum Abziehen von Sauerstoff aus Luft umfasst, wobei das zweite Rotationsdruckwechseladsorptionssystem einen ersten Einsatzgaseinlass zur Aufnahme einer Luftzufuhr und einen mit dem Kathodengaseinlass verbundenen Gasauslass zur Versorgung des Kathodenkanals mit einem mit Sauerstoffgas angereicherten Gasstrom enthält, und der Reaktor einen Brenner umfasst, der einen ersten Brennereinlass zur Aufnahme von Luft und einen zweiten Brennereinlass zur Aufnahme eines mit Wasserstoffgas angereicherten Gasstroms aus dem ersten Rotationsdruckwechseladsorptionssystem zur Verbrennung des aufgenommenen Wasserstoffgases im Brenner zwecks Rückgewinnung von Wärmeenergie zur Druckbeaufschlagung der Gaszufuhr enthält.

42. Stromerzeugungssystem nach Anspruch 41, bei dem mindestens eines der Rotationsdruckwechseladsorptionssysteme ein Rotationsmodul, das einen Stator und einen bezüglich des Stators drehbaren Rotor enthält, wobei der Rotor mehrere Strömungswege zur Aufnahme von Adsorptionsmaterial darin enthält, um vorzugsweise eine erste Gaskomponente als Reaktion auf zunehmenden Druck in den Strömungswegen bezüglich einer zweiten Gaskomponente aufzunehmen, und eine mit dem Rotationsmodul verbundene Verdichtungsmaschinenanlage, um Gasstrom durch die Strömungswege zum Trennen der ersten Gaskomponente von der zweiten Gaskomponente zu erleichtern, umfasst.

43. Stromerzeugungssystem nach Anspruch 42, bei dem der Stator eine erste Statorventilfläche, eine zweite Statorventilfläche, mehrere erste Funktionskammern, die in die erste Statorventilfläche münden, und mehrere zweite Funktionskammern, die in die zweite Statorventilfläche münden, enthält und der Rotor eine erste Rotorventilfläche, die mit der ersten Statorventilfläche verbunden ist, eine zweite Rotorventilfläche, die mit der zweiten Statorventilfläche verbunden ist, und mehrere in den Rotorventilflächen ausgebildete Öffnungen enthält, die mit jeweiligen Enden der Strömungswege und den Funktionskammern in Verbindung stehen.

44. Stromerzeugungssystem nach Anspruch 43, bei dem die Verdichtungsmaschinenanlage mit einem Teil der Funktionskammern verbunden ist, um den Teil der Funktionskammern auf mehreren verschiedenen jeweiligen Druckpegeln zwischen einem oberen Druck und einem unteren Druck zu halten und so einen gleichförmigen Gasstrom durch den Teil der Funktionskammern aufrechtzuerhalten.

45. Verfahren zur Erzeugung eines elektrischen Potentials, das die folgenden Schritte umfasst:
Bereitstellen einer Brennstoffzelle mit einem Anodenkanal, der einen Andodengaseinlass und einen Anodengasauslass enthält, einem Kathodenkanal, der einen Kathodengaseinlass und einen Kathodengasauslass enthält, und einem Elektrolyten, der mit dem Anoden- und dem Kathodenkanal in Verbindung steht, um einen Ionenaustausch zwischen dem Anoden- und dem Kathodenkanal zu erleichtern; und
Versorgen des Kathodengaseinlasses mit einem mit Sauerstoffgas angereicherten Gasstrom, wobei der Versorgungsschritt die Schritte der Versorgung einer Rotationsdruckwechseladsorptionsvorrichtung mit einer ersten Gaszufuhr zur Erzeugung eines mit Sauerstoffgas angereicherten Produktgasstroms und der Zuführung des Produktgasstroms zum Kathodengaseinlass umfasst.

46. Verfahren nach Anspruch 45, bei dem der Versorgungsschritt weiterhin den Schritt des Rückführens eines aus dem Kathodengasauslass abgegebenen Kathodengasteils zum Kathodengaseinlass umfasst.

47. Verfahren nach Anspruch 46, bei dem der Rückführungsschritt den Schritt des Zuführens des Abgasteils zur Rotationsdruckwechseladsorptionsvorrichtung als eine zweite Gaszufuhr umfasst.

48. Verfahren nach Anspruch 47, bei dem der Rückführungsschritt weiterhin den Schritt des Reinigens des Rests des abgegebenen Kathodengases umfasst.

49. Verfahren nach Anspruch 48, bei dem der Rückführungsschritt den Schritt des Zuführens des Abgasteils mit erhöhtem Druck zum Kathodengaseinlass umfasst.

50. Verfahren nach Anspruch 49, bei dem der Rückführungsschritt weiterhin die Rückgewinnung von Abwärme aus der Brennstoffzelle zur Verbesserung der Rückgewinnung von Entspannungsenergie aus der Rotationsdruckwechseladsorptionsvorrichtung umfasst.

51. Verfahren zur Erzeugung eines elektrischen Potentials, das die folgenden Schritte umfasst:
Bereitstellen einer Brennstoffzelle mit einem Anodenkanal, der einen Andodengaseinlass und einen Anodengasauslass enthält, einem Kathodenkanal, der einen Kathodengaseinlass und einen Kathodengasauslass enthält, und einem Elektrolyten, der mit dem Anoden- und dem Kathodenkanal in Verbindung steht, um einen Ionenaustausch zwischen dem Anoden- und dem Kathodenkanal zu erleichtern; und
Versorgen des Anodengaseinlasses mit einem mit Wasserstoffgas angereicherten Gasstrom, wobei der Versorgungsschritt die Schritte der Versorgung einer Rotationsdruckwechseladsorptionsvorrichtung mit einer ersten Gaszufuhr zur Erzeugung eines mit Wasserstoffgas angereicherten ersten Produktgasstroms und der Zuführung des ersten Produktgasstroms zum Anodengaseinlass umfasst; und Versorgen des Kathodengaseinlasses mit einem mit Sauerstoffgas angereicherten zweiten Gasstrom.

52. Verfahren nach Anspruch 51, bei dem der Schritt des Zuführens eines ersten Gasstroms weiterhin den Schritt des Rückführens eines aus dem Anodengasauslass abgegebenen Anodengasteils zum Anodengaseinlass umfasst.

53. Verfahren nach Anspruch 52, bei dem der Rückführungsschritt weiterhin den Schritt des Zuführens des Abgasteils zur Rotationsdruckwechseladsorptionsvorrichtung als eine zweite Gaszufuhr umfasst.

54. Verfahren nach Anspruch 53, bei dem der Schritt des Zuführens eines zweiten Gasstroms die Schritte des Zuführens einer Luftzufuhr zu einer Rotationsdruckwechseladsorptionsvorrichtung zur Erzeugung eines mit Sauerstoffgas angereicherten zweiten Produktgasstroms und des Zuführens des zweiten Produktgasstroms zum Kathodengaseinlass umfasst.

55. Verfahren nach Anspruch 54, bei dem der Schritt des Zuführens eines mit Wasserstoffgas angereicherten ersten Gasstroms die Schritte des Zuführens eines Kohlenwasserstoffbrennstoffs zu einem Reformer, das Zuführen von mit Sauerstoffgas angereichertem Gas aus dem Kathodengasauslass und Reagieren des Brennstoffs mit mit Sauerstoff angereichertem Gas aus dem Kathodengasauslass zur Erzeugung der ersten Gaszufuhr umfasst.

56. Verfahren nach Anspruch 55, bei dem der Reformer einen Dampfreformer mit einer Brennkammer umfasst und der Reaktionsschritt das Zuführen des Brennstoffs zur Brennkammer und das Bereitstellen von Wärmeenergie für die Brennkammer durch Verbrennen von aus der Rotationsdruckwechseladsorptionsvorrichtung als schweres Produktgas abgezogenem Tail Gas mit dem mit Sauerstoff angereichertem Gas aus dem Kathodengasauslass in der Brennkammer umfasst.

57. Verfahren nach Anspruch 55, bei dem der Reformer einen Dampfreformer umfasst, der eine Brennkammer enthält, und der Reaktionsschritt das Zuführen des Brennstoffs zur Brennkammer und Bereitstellen von Wärmeenergie für die Brennkammer durch Verbrennen von aus der Rotationsdruckwechseladsorptionsvorrichtung als schweres Produktgas abgezogenem Tail Gas mit einem Teil der Luftzufuhr in der Brennkammer und Rückgewinnen von Verbrennungswärme von der Brennkammer zur Zuführung von druckbeaufschlagter Luft zur Rotationsdruckwechseladsorptionsvorrichtung umfasst.
